# EUROPEAN PATENT SPECIFICATION

(11) **EP 3 114 879 B1**
(45) Date of publication and mention of the grant of the patent: **14.07.2021**
(21) Application number: 14824570.7
(22) Date of filing: 21.11.2014
(51) Int. Cl.: H04W 36/30, H04W 36/22, H04W 84/12, H04W 36/14

(54) **METHODS AND DEVICES FOR IMPROVING ACCESS STEERING BETWEEN RADIO ACCESS NETWORKS**
VERFAHREN UND VORRICHTUNGEN ZUR VERBESSERTEN ZUGANGSSTEUERUNG ZWISCHEN FUNKZUGANGSNETZEN
PROCÉDÉS ET DISPOSITIFS POUR AMÉLIORER L'ORIENTATION D'ACCÈS ENTRE DES RÉSEAUX D'ACCÈS RADIO

(30) Priority: 03.03.2014 US 201461946915 P
(43) Date of publication of application: 11.01.2017
(73) Proprietor: Telefonaktiebolaget LM Ericsson (publ), 164 83 Stockholm (SE)
(72) Inventor: LINDHEIMER, Christofer, S-583 36 Linköping (SE); MESTANOV, Filip, S-191 49 Sollentuna (SE); TEYEB, Oumer, S-177 44 Solna (SE)
(74) Representative: Ericsson
(86) International application number: PCT/SE2014/051396
(87) International publication number: WO 2015/133955

(56) References cited:
- WO-A1-2013/040978
- WO-A1-2013/152483
- US-A1- 2013 310 043
- CLINT CHAPLIN: "IEE P802.11; Make Before Break or Tentative Reassociation (Replace)", IEEE, PISCATAWAY, NJ, USA, 18 September 2006 (2006-09-18), XP040386628,
- None

## Description

### TECHNICAL FIELD

The proposed technology relates to a method and a network node for initiating a steering of a communication device from a source Radio Access Network, source RAN, initially serving the communication device through a first connection, to a target Radio Access Network, target RAN.

### BACKGROUND

An important aspect of modern wireless or radio communication technologies relates to functionalities and mechanisms that enable communication devices to effectively utilize different or mixed technologies. To be able to provide communication devices with the opportunity to use different or mixed technologies it is of importance that efficient mechanisms are found that makes it possible to direct, or steer, the communication devices between different Radio Access Networks, RANs and different Radio Access Technologies, RATs.

Communication devices such as terminals are also known as e.g. User Equipments (UE), mobile terminals, wireless terminals and/or mobile stations. Terminals are enabled to communicate wirelessly in a cellular communications network or wireless communication system, sometimes also referred to as a cellular radio system or cellular networks. The communication may be performed e.g. between two terminals, between a terminal and a regular telephone and/or between a terminal and a server via a Radio Access Network (RAN) and possibly one or more core networks, comprised within the cellular communications network.

Terminals may further be referred to as mobile telephones, cellular telephones, laptops, or surf plates with wireless capability, just to mention some further examples. The terminals in the present context may be, for example, portable, pocket-storable, hand-held, computer-comprised, or vehicle-mounted mobile devices, enabled to communicate voice and/or data, via the RAN, with another entity, such as another terminal or a server.

The cellular communications network covers a geographical area which is divided into cell areas, wherein each cell area being served by an access node such as a base station, e.g. a Radio Base Station (RBS), which sometimes may be referred to as e.g. "eNB", "eNodeB", "NodeB", "B node", or BTS (Base Transceiver Station), depending on the technology and terminology used. The base stations may be of different classes such as e.g. macro eNodeB, home eNodeB or pico base station, based on transmission power and thereby also cell size. A cell is the geographical area where radio coverage is provided by the base station at a base station site. One base station, situated on the base station site, may serve one or several cells. Further, each base station may support one or several communication technologies. The base stations communicate over the air interface operating on radio frequencies with the terminals within range of the base stations. In the context of this disclosure, the expression Downlink (DL) is used for the transmission path from the base station to the mobile station. The expression Uplink (UL) is used for the transmission path in the opposite direction i.e. from the mobile station to the base station.

In 3rd Generation Partnership Project (3GPP) Long Term Evolution (LTE), base stations, which may be referred to as eNodeBs or even eNBs, may be directly connected to one or more core networks.

3GPP LTE radio access standard has been written in order to support high bitrates and low latency both for uplink and downlink traffic. All data transmission is in LTE controlled by the radio base station.

In IEEE, WLAN (also known as Wi-Fi as certified by the Wi-Fi Alliance (WFA) and these terms will be used interchangeably throughout this document) is standardized in the 802.11 specifications (IEEE Standard for Information technology-Telecommunications and information exchange between systems. Local and metropolitan area networks-Specific requirements. Part 11: Wireless LAN (Local Area Network) Medium Access Control (MAC) and Physical Layer (PHY) Specifications) WLAN is a technology that currently mainly operates on the 2.4 GHz or the 5 GHz band. The IEEE 802.11 specifications regulate the STA (i.e. the access points or wireless terminals) physical layer, MAC layer and other aspects to secure compatibility and inter-operability between access points and portable terminals. A communication device configured for communication in Radio Access networks (RANs) of different Radio Access Technologies (RATs) may be referred to as a multi-mode station. In this disclosure, the abbreviation STA (STA = station) is used for such a multimode station in the WLAN. WLAN is generally operated in unlicensed bands, and as such, communication over WLAN may be subject to interference sources from any number of both known and unknown devices. WLAN is commonly used as wireless extensions to fixed broadband access, e.g., in domestic environments and hotspots, like airports, train stations and restaurants.

Recently, WLAN has been subject to increased interest from cellular network operators, not only as an extension to fixed broadband access. The interest is mainly about using the WLAN technology as an extension, or alternative to cellular radio access network technologies to handle the always increasing wireless bandwidth demands. Cellular operators that are currently serving mobile users with, e.g., any of the 3GPP technologies, LTE, UMTS (Universal Mobile Telecommunications System)/ WCDMA (Wideband Code Division Multiple Access), or GSM (Global System for Mobile Communications, originally Group Special Mobile), see WLAN as a wireless technology that may provide good support in their regular cellular networks. The term "operator-controlled WLAN" points to a WLAN deployment that on some level is integrated with a cellular network operators existing network and where the 3GPP radio access networks and the WLAN wireless access may even be connected to the same core network and provide the same services.

There is currently quite intense activity in the area of operator-controlled WLAN in several standardization organizations. In 3GPP, activities to connect WLAN access points to the 3GPP-specified core network is pursued, and in Wi-Fi alliance (WFA) activities related to certification of WLAN products are undertaken, which to some extent also is driven from the need to make WLAN a viable wireless technology for cellular operators to support high bandwidth offerings in their networks. The term WLAN offload is commonly used and points towards that cellular network operators seek means to offload traffic from their cellular networks to WLAN, e.g., in peak-traffic-hours and in situations when the cellular network for one reason or another needs to be off-loaded, e.g., to provide requested quality of service, maximize bandwidth or simply for coverage.

For a wireless operator, by offering a mix of two technologies that are standardized in isolation from each other, comes the challenge of providing intelligent mechanisms for co-existence. As pointed above, up until now 3GPP and WLAN have evolved as two separate systems, being standardized up to a great extend in isolation. However, there are ongoing initiatives to improve the interoperability of the two systems and provide mobile operators with a greater control over their "operator-deployed" WLANs.

A number of mechanisms for steering users between WLAN and 3GPP are currently being considered, both on the WLAN side as well as on the 3GPP side. For some time, there has been a standardized mechanism for operators to provide access selection and steering related information to UEs through Access Network Discovery and Selection Function (ANDSF) functionality as set forth by 3GPP and described in, e.g., 3GPP TS 23.402, 24.302 and 24.312.

US 2013/310043 A1 describes a method whereby a base station (BS) of a source cell instructs a mobile device (MD) to perform handover, by transmitting a handover command when the MD consumes more than a certain resource threshold. The MD stores information about the fact that handover is due to load balancing reasons and transmits said information to the BS of the target cell after handover.

### SUMMARY

It is a general object to provide a mechanism that enables steering of communication devices from a particular Radio Access Network, RAN, to another Radio Access Network.

In particular it is desirable to provide a mechanism that enables Radio Access Networks, RAN, to take informed decisions whether to grant access to a communication device steered from another RAN.

It is an object to provide a method, performed by communication device that enables the communication device to be steered from a source Radio Access Network, source RAN to a target Radio Access Network, target RAN.

It is also an object to provide a method, performed by a network node in a Radio Access Network, RAN, that initiates a steering of a communication device from the RAN to a target Radio Access Network, target RAN.

Another object is to provide a method performed by a network node in a Radio Access Network, RAN, for deciding whether a communication device initially connected to a source Radio Access Network, source RAN, is granted access to the RAN.

It is still another object to provide a user equipment configured to enable steering from a source Radio Access Network, source RAN, to a target Radio Access Network, target RAN.

Yet another object is to provide a network node configured to initiate a steering of a communication device from the RAN to a target Radio Access Network, target RAN.

A further object is to provide a network node configured to decide whether a communication device, initially connected to a source Radio Access Network, source RAN, is granted access to the RAN.
Still another object is to provide corresponding computer programs and computer program products.

These and other objects are met by embodiments of the proposed technology.

According to a first aspect, there is provided a method performed by a communication device for enabling steering from a source Radio Access Network, source RAN, initially serving the communication device through a first connection, to a target Radio Access Network, target RAN. The method comprises to request a second connection to a target RAN and to notify the target RAN about the reason for the requested second connection, thereby enabling the target RAN to provide the second connection based on the notification.

According to a second aspect there is provided a method performed by a network node in a Radio Access Network, RAN, for initiating a steering of a communication device from the RAN to a target Radio Access Network, target RAN, wherein the RAN is initially serving the communication device though a first connection. The method comprises to instruct the communication device to request a second connection to the target RAN and also to instruct the communication device to provide the reasons for requesting the second connection.

According to a third aspect there is provided a method performed by a network node in a Radio Access Network, RAN, for deciding whether a communication device initially connected to a source Radio Access Network, source RAN, is granted access to the RAN. The method comprises the steps of receiving a connection request that comprises information about the reasons for the connection request and deciding, based at least partially on the received information about the reasons for the connection request, whether the connection request is granted and the communication device given access to the RAN.

According to a fourth aspect there is provided a communication device configured for enabling steering of access from a source Radio Access Network, source RAN, initially serving the communication device through a first connection, to a target Radio Access Network, target RAN. The communication device is configured to request a second connection to a target RAN and the communication device is also configured to notify the target RAN about the reason for the requested second connection, enabling the target RAN to provide the second connection based on the notification.

According to a fifth aspect there is provided a network node in a Radio Access Network, RAN, configured to initiate a steering of a communication device from the RAN to a target Radio Access Network, target RAN, where in the RAN is configured to initially serve the communication device though a first connection. The network node is configured to instruct the communication device to request a second connection to the target RAN and the network node is also configured to instruct the communication device to provide the reasons for requesting the second connection.

According to a sixth aspect there is provided a network node in a Radio Access Network, RAN, configured to decide whether a communication device initially connected to a source Radio Access Network, source RAN, is granted access to the RAN. The network node is configured to receive a connection request comprising information about the reasons for the connection request. The network node is also configured to decide, based at least partially on the received information about the reasons for the connection request, whether the connection request is granted and the communication device given access to the RAN.

According to a seventh aspect there is provided a computer program comprising instructions, which when executed by a processor cause the processor to:
- initiate a request for a second connection to a target RAN;
- incorporate the reason for the requested second connection in a notification to be communicated to the target RAN, thereby enabling the target RAN to provide the second connection based on the information.

According to an eight aspect there is provided a computer program comprising instruction, which when executed by a processor cause the processor to:
- read a connection request comprising information about the reasons for the connection request;
- decide, based at least partially on the information about the reasons for the connection request, whether the connection request is granted and the communication device given access to the RAN.

According to a ninth aspect, there is provided a computer program product comprising a computer-readable storage medium having stored thereon the computer program of the above seventh or eighth aspect.

In this way, it is possible to enable a steering of access between different Radio Access Networks. Even though some embodiments have been summarized above, with reference to a first aspect, a third aspect, a fourth aspect and a sixth to a ninth aspect, which are not covered by the claims and are presented as examples useful for understanding the invention, the claimed subject matter is defined in the attached claims 1-2.

Other advantages will be appreciated when reading the detailed description.

### DRAWINGS

FIG.1 is a schematic drawing illustrating an open-system authentication procedure that a communication device may perform when connecting to a WLAN.
FIG.2 is a schematic drawing illustrating a LTE attachment procedure.
FIG.3 is a signalling diagram illustrating the communication between an eNB/Radio Network Controller, RNC and a User Equipment, UE.
FIG.4 is a signalling diagram that illustrates how an eNB/RNC provides a UE with threshold values.
FIG.5 illustrates possible steps used in traffic steering.
FIG.6 illustrates the content of a connection reason field that can be used in the proposed technology.
FIG.7 provides another illustration of a connection reason field that can be used in particular embodiments of the proposed technology.
FIG.8 illustrates schematically a birds-eye view of a communication system comprising different Radio Access Networks with corresponding network nodes that can serve a communication device.
FIG.9 illustrates schematically how a communication device or UE is able to communicate over the 802.11 specified protocols towards a Wi-Fi access point.
FIG.10 illustrates schematically a portion of an LTE Radio Access Network and corresponding control nodes.
FIG.11 illustrates schematically a network where the E-UTRAN radio access network and a Wi-Fi wireless access point are connected to the same P-GW 340.
FIG.12 is a flow diagram illustrating a possible embodiment of a method according to the proposed technology for enabling steering of a communication device between different Radio Access Networks, RANs.
FIG.13 is a flow diagram illustrating another exemplary embodiment of a method according to the proposed technology for initiating a steering of a communication device between different Radio Access Networks, RANs.
FIG.14 is a flow diagram illustrating an embodiment of a method for deciding whether a communication device that is initially connected to a source Radio Access Network, source RAN, is granted access to the RAN according to the proposed technology.
FIG.15 is a flow diagram illustrating an exemplary embodiment of a method according to the proposed technology.
FIG.16 is a flow diagram illustrating yet another exemplary embodiment of a method according to the proposed technology.
FIG.17 is a flow diagram illustrating yet another exemplary embodiment of a method according to the proposed technology.
FIG.18 is a block diagram illustrating a communication device according to a particular embodiment of the proposed technology.
FIG. 19 is a block diagram illustrating an embodiment of network node according to the proposed technology.
FIG. 20 is a schematic illustration showing the use of a computer program and computer program product in a network node or a communication device according to the proposed technology.
FIG. 21 provides a diagram illustrating an alternative embodiment of a communication device according to the proposed technology.
FIG. 22 is a diagram illustrating a particular embodiment of a network node according to the proposed technology.
FIG. 23 illustrates a particular embodiment of a network node according to the proposed technology.

### DETAILED DESCRIPTION

Embodiments herein address the issue of steering communication devices between different Radio Access Networks, RANs, and/or between different Radio Access Technologies, RATs such as, for example, between a 3GPP cellular RAN and a WLAN. In particular, embodiments herein provides mechanisms whereby a communication device can be steered, or directed, between different RANs or RATs in an improved fashion. Particular examples of embodiments also provides mechanisms that counters the problems related to the fact that communication devices can be shuffled between two networks without being able to connect to any of them. This is referred to as ping-ponging a communication device between different networks.

One of the challenges when working with a number of different steering mechanisms that would make a communication device, such as a UE, move or access different radio access technologies would be the risk of ping-pong-resulting instructions. For example, if there is a mechanism or functionality on a non-cellular network side, e.g. WLAN side, of a network suggesting that a UE should access a cellular network, e.g. a 3GPP network, there may, at the same time be a mechanism on the 3GPP network side that, given the exact same conditions, suggest that a UE should instead try to access the WLAN and steer traffic over WLAN instead of 3GPP. It would be advantageous to implement mechanisms that could help the different RAT's to make well-informed decisions about steering and, e.g., make sure that these types of ping-pong steering instructions are not given to a UE.

It would of course be possible to avoid such ping-ponging instructions if there is always one RAT that is responsible for the steering decisions. For example, even though a user is connected to WLAN only, it is rules and conditions that are given from the 3GPP side that govern both the access selection and traffic steering to WLAN as well as the conditions for 3GPP. However, this is difficult to achieve, as it may sometimes be the case that the UE is only connected to one RAT and then instructions (updated) from another RAT will be difficult to forward.

It is therefore an object of certain embodiments herein to avoid ping-pong-resulting instructions when a communication device tries to connect from a first Radio Access network (RAN) also referred to as a source Radio Access Network, source RAN, of a first Radio Access Technology (RAT), to a second RAN, also referred to as a target Radio Access Network, target RAN, of a second RAT.

The proposed technology thus offers improvements with regard to the operation of communication devices and/or network nodes in the radio access network(s) that enables communication devices to be more effectively steered between the networks.

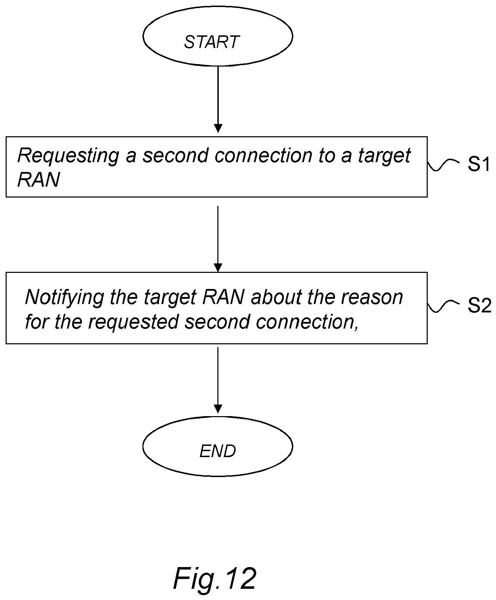

The flow diagram of FIG. 12 illustrates schematically a particular embodiment of the proposed technology, which is not covered by the claims, but is presented as an example useful for understanding the invention, said embodiment relating to a method performed by a communication device for enabling steering of access from a source Radio Access Network, source RAN, initially serving the communication device through a first connection, to a target Radio Access Network, target RAN. The method comprises:
- requesting S1 a second connection to a target RAN;
- notifying S2 the target RAN about the reason for the requested second connection, enabling the target RAN to provide the second connection based on the notification.

Currently, when a communication device, e.g. a mobile terminal such as a UE, connects to a certain RAN, it does not provide the reason for the connection. For example, when the communication device tries to connect to a network node in a wireless local area network it does not provide any additional information on the reasons for the connection. In the proposed technology the reasons for requesting the second, or new, connection are provided together with the request. By providing this information to the target RAN the target RAN can take a more informed decision whether to grant the communication device access to the target RAN.

In some embodiments of the method of the proposed technology is the source RAN of a first Radio Access Technology, RAT and the target RAN of a second Radio Access Technology, RAT.

Such an embodiment of the proposed technology provides a mechanism whereby the communication device can be steered between different Radio Access Technologies, RATs in an efficient way.

In exemplary embodiments of the proposed method are the source RAN and the target RAN based on different RATs.

In still another exemplary embodiment of the proposed method, one of the source RAN and the target RAN is a cellular network and the other is a non-cellular network.

By way of example, in an exemplary embodiment of the method, the cellular network comprises a 3^{rd} Generation Partnership Project network, 3GPP network and the non-cellular network comprises a Wireless Local Area Network, WLAN, or a non-3GPP network.

Still another exemplary embodiment of the proposed method provides a method wherein the step of notifying the target RAN about the reason for the requested second connection comprises to indicate that the request is due to steering instructions communicated from the source RAN.

By providing this information to the target RAN it is indicated that there are some criteria relevant to the current serving RAN, that is the source RAN, that the communication device does not fulfil and that this should be taken into consideration when the target RAN decides whether to deny or grant the communication device access to the target RAN. By way of example, such criteria might, for example, be traffic overload on the source RAN or fading signal strength between the source RAN and the communication device.

As an optional feature an exemplary embodiment of the proposed method provides a method wherein the second connection is requested to either replace the first connection or be in addition to the first connection.

In this way it will be possible for the communication device to imply that the initial connection, that is, the connection between the communication device and the source RAN, should not be terminated if there are reasons to keep the initial connection. This might for example be the case when there is a substantial traffic on the source RAN but where this traffic is expected to decrease. In other cases a termination of the initial connection might however be preferred. For example in those cases where there is a significant reduction of the signal strength between the source RAN and the communication device. This provides more information that might be useful for the target RAN when the target RAN decides whether to grant the communication device access.

In still another embodiment of the proposed method is the target RAN notified about the reason, referred to as a connection reason, for the requested second connection by means of an information element added to existing frame(s) or existing field(s). By reusing existing frames or fields for messages that is transmitted to the target RAN there will be no need to substantially alter the general protocols for requesting access and alike.

In a particular embodiment of the method, wherein the source RAN comprises a 3^{rd} Generation Partnership Project network, 3GPP network and the target RAN comprises a Wireless Local Area Network, WLAN is the step of notifying S2 the WLAN about the reason for the requested second connection performed by adding the information element to the frames of any of the following messages, a Probe Request message, an Association Request message, a Reassociation Request message and an Authentication Request message.

It is possible to add the information to all of the mentioned frames it is however also possible to add the information element to any particular one of the mentioned messages.

The information element comprises, in another version of an embodiment of the proposed method, a Vendor Specific information element.

In an alternative version of the proposed method, where the source RAN comprises a 3^{rd} Generation Partnership Project network, 3GPP network and the target RAN comprises a Wireless Local Area Network, WLAN, is the step of notifying S2 the WLAN about the reason, referred to as a connection reason, for the requested second connection performed by adding the information element to an already existing field, such as a Status Code field.

By way of example, in one potential version of the proposed method is the connection reason added to an existing field, such as a status code field, and the field is added to to any of the following frames, a Probe request frame, an Association request frame and a Reassociation request frame.

It is possible to add the connection reason to any particular one of these frames but it is also possible to add them to all of the mentioned frames.

In yet another example of the proposed method according the connection reason also comprises information whether the requested second connection is intended to replace the current connection or be in addition to the current connection. By adding this information to the connection reason there is provided an efficient way to communicate the will to either replace the current connection, due to some specified reason such as fading signal strength, or to maintain the initial connection in addition to the new connection.

A possible embodiment of the proposed technology relates to a method wherein the source RAN comprises a Wireless Local Area Network, WLAN, and the target RAN comprises a 3^{rd} Generation Partnership Project network, 3GPP network, and wherein the step of notifying S2 the 3GPP network about the reason for the requested second connection is performed by communicating information referred to as an attachment cause to the target RAN.

In a particular embodiment of the method, the information referred to as an attachment cause is incorporated in an Attachment Request Message to be communicated to the 3GPP network, where the RRC parameters part of the Attachment Request Message is enhanced to comprise the attachment cause.

In an exemplary version of the proposed method is additional information comprising information about the identity of the WLAN, measured signal levels and other radio conditions at the time when the step S2 of requesting a second connection is performed, also included in the attachment cause communicated to the 3GPP network.

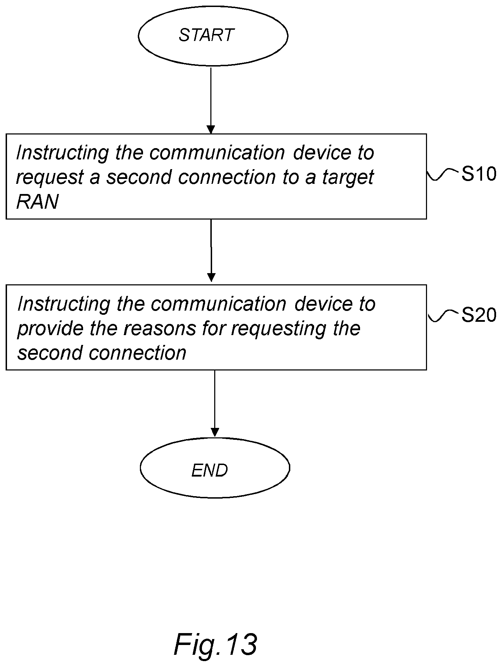

An embodiment of the invention, schematically illustrated in the flow diagram of FIG. 13 provides a method performed by a network node in a Radio Access Network, RAN, for initiating a steering of a communication device from the RAN to a target Radio Access Network, target RAN. The method comprises:
- instructing S10 the communication device to request a second connection to the target RAN; and
- instructing S20 the communication device to provide the reasons for the second connection.

According to the proposed method a network node of a RAN, e.g. a source RAN that serves the communication device can trigger the communication device to change RANs or even RATs due to some specified reason. In those cases where the network node of the source RAN initiates a steering to a target RAN it instructs the communication device to request a new connection to the target RAN and also instructs the communication device to provide the reasons for requesting the new connection. In this way the network node triggers a mechanism that ensures that the target RAN can take an informed decision whether to grant the communication device access to the target RAN or whether to deny it access.

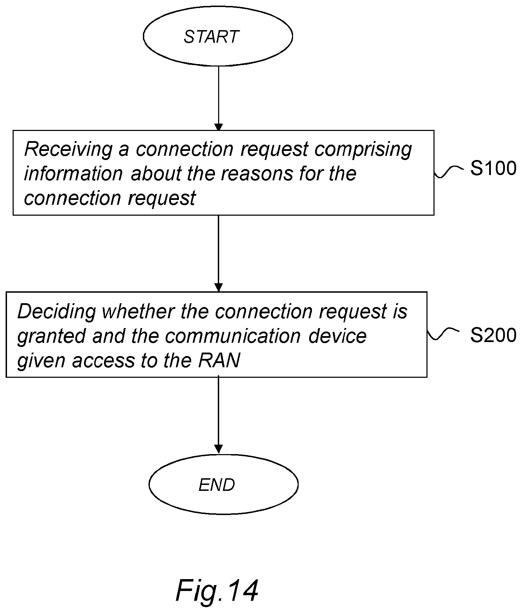

FIG. 14 provides a schematic illustration of another aspect of the proposed technology, which is not covered by the claims, but is presented as an example useful for understanding the invention. The flow diagram of FIG. 14 illustrates a method performed by a network node in a Radio Access Network, RAN, for deciding whether a communication device initially connected to a source Radio Access Network, source RAN, is granted access to the RAN. The method comprises the steps of:
- receiving S100 a connection request comprising information about the reasons for the connection request;
- deciding S200, based at least partially on the received information about the reasons for the connection request, whether the connection request is granted and the communication device given access to the RAN.

According to this particular aspect, the network node of the RAN, e.g. the target RAN, receives a connection request that comprises the reasons why the communication device requests access. This additional information is then partially used to decide whether the communication device shall be given access to the RAN. That the information is partially used may refer to such cases where the network node, in certain exemplary scenarios, have to take other circumstances, such as current traffic flow within the target RAN, into consideration before granting the communication device access to the RAN. Hence even if the target RAN is inclined to grant access to communication device based on the provided reason it may still be denied access due to internal reasons of the target RAN.

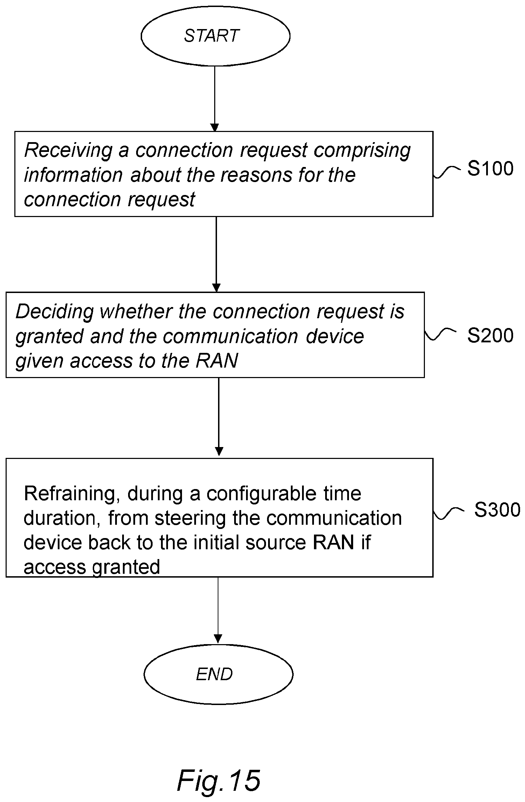

By way of example, according to one embodiment of the proposed method, in the case that the communication device was given access to the RAN, the method comprises the further step S300 of refraining, during a configurable time duration, from steering the communication device back to the initial source RAN. This embodiment is schematically illustrated in FIG. 15.

By providing a mechanism where the network node refrains from steering the communication device back to its initial source RAN measures are taken to ensure that the communication device is not ping-ponged between different RANs.

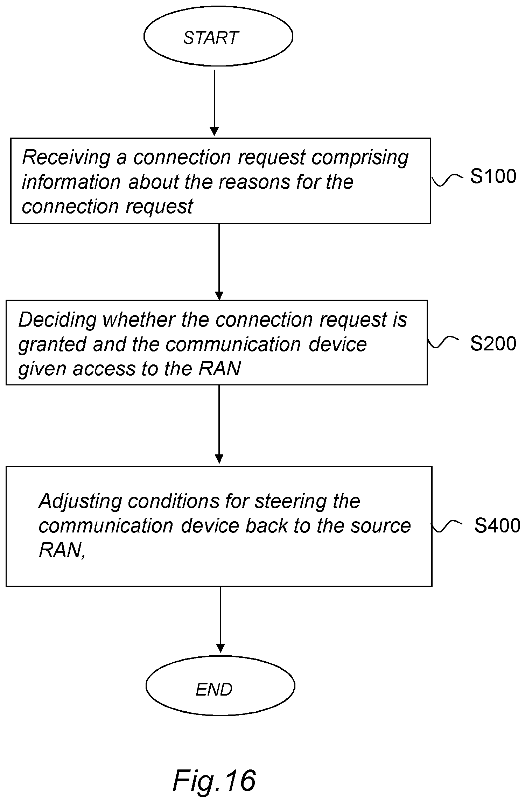

FIG. 16 provides a flow diagram that schematically illustrates a possible embodiment of the proposed method, which is not covered by the claims, but is presented as an example useful for understanding the invention. The method, in the case that the communication device was given access to the RAN, comprises the further step S400 of adjusting conditions for steering the communication device back to the source RAN, where the conditions are adjusted to avoid steering the communication device back to the initial source RAN.

This particular embodiment provides an alternative way to ensure that the communication device is not ping-ponged between different RANs. In a particular example the adjusted conditions may refer to scaled conditions in the measurement report. By scaling these conditions it will be possible to control the communication device so that it only will report measurement reports (measurement reports may trigger steering commands from the serving network node) if the conditions are substantially altered, that is have become significantly better or significantly worse.

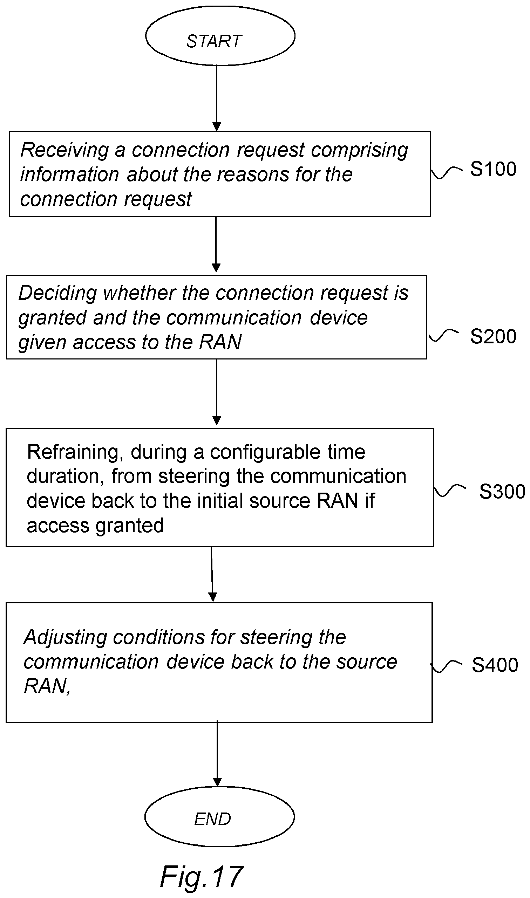

FIG.17 shows an alternative embodiment, which is also not covered by the claims, but is presented as an example useful for understanding the invention. The method, in the case the communication device was given access to the RAN, comprises the further step S300 of refraining, during a configurable time duration, from steering the communication device back to the initial source RAN and the further step S400 of adjusting conditions for steering the communication device back to the source RAN, where the conditions are adjusted to avoid steering the communication device back to the initial source RAN.

The proposed technology also provides for a communication device that is configured to perform the steps of the method. The advantages associated with such a communication device are the same as the advantages achieved by the corresponding method.

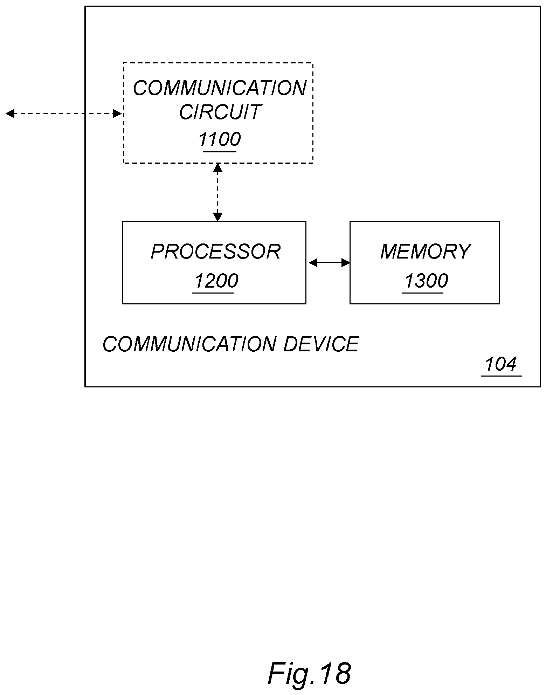

The block diagram of FIG.18 in particular illustrate a communication device 104 configured for enabling steering of access from a source Radio Access Network, source RAN, initially serving the communication device through a first connection, to a target Radio Access Network, target RAN. The communication device is configured to request a second connection to a target RAN and the communication device is configured to notify the target RAN about the reason for the requested second connection, enabling the target RAN to provide the second connection based on the notification.

In an exemplary embodiment of the communication device 104 is the source RAN of a first Radio Access Technology, RAT and the target RAN of a second Radio Access Technology, RAT
In yet another embodiment of communication device are the source RAN and the target RAN based on different RATs.

In still another exemplary embodiment of the communication device 104, one of the source RAN and target RAN comprises a cellular network and the other a non-cellular network.

In a particular example of such a communication device 104, the cellular network comprises a 3^{rd} Generation Partnership Project network, 3GPP network and the non-cellular network comprises a Wireless Local Area Network, WLAN, or a non-3GPP network.

In a particular embodiment of the communication device 104 is the communication device configured to notify the target RAN about the reason for the requested second connection by indicating that the request is due to steering instructions communicated from the source RAN.

By way of example, in the communication device 104 according to the proposed technology is the second connection requested to either replace the first connection or be in addition to the first connection.

A possible embodiment of communication device comprises a communication device 104 that is configured to notify the target RAN about the reason, referred to as a connection reason, for the requested second connection by means of an information element added to existing frame(s) or existing field(s).

In an optional embodiment of the communication device, wherein the source RAN comprises a 3^{rd} Generation Partnership Project network, 3GPP network and the target RAN comprises a Wireless Local Area Network, WLAN, is the communication device 104 configured to notify the WLAN about the reason for the requested second connection by adding the information element to the frames of any of the following messages, a Probe Request message, an Association Request message, a Reassociation Request message and an Authentication Request message.

In still another optional embodiment of the communication device, the information element comprises a Vendor Specific information element.

In an exemplary embodiment of the communication device, wherein the source RAN comprises a 3^{rd} Generation Partnership Project network, 3GPP network and the target RAN comprises a Wireless Local Area Network, WLAN, is the communication device 104 configured to notify the WLAN about the reason, referred to as a connection reason, for the requested second connection by adding the information element to an already existing field, such as a Status Code field.

In an optional embodiment is the communication device 104 configured to add the connection reason to an existing field, such as a status code field, and configured to add the field to each or to any of the Probe request frame, the Association request frame and the Reassociation request frame.

In an exemplary embodiment of the communication device 104, the connection reason also comprises information whether the requested second connection is intended to replace the current connection or be in addition to the current connection.

In an optional embodiment of the proposed communication device 104, wherein the source RAN comprises a Wireless Local Area Network, WLAN, and the target RAN comprises a 3^{rd} Generation Partnership Project network, 3GPP network, is the communication device 104 configured to notify the 3GPP network about the reason for the requested second connection by communicating information referred to as an attachment cause to the target RAN.

In still another optional embodiment of the communication device is the communication device 104 configured to incorporate the information referred to as an attachment cause in an Attachment Request Message to be communicated to the 3GPP network, where the RRC parameters part of the Attachment Request Message is enhanced to comprise the attachment cause.

The communication device 104 is according to a particular example configured to include additional information in the attachment cause to be communicated to the 3GPP network, the additional information comprising information about the identity of the WLAN, measured signal levels and other radio conditions at the time when a second connection is requested.

A particular version of the proposed communication device is shown in the block diagram of FIG.18. The communication device 104 comprises a processor 1200 and a memory 1300, the memory 1300 comprising instructions, which when executed on the processor 1200 cause the processor to enable the steering of access from a source Radio Access Network, source RAN, initially serving the communication device 104 through a first connection, to a target Radio Access Network, target RAN.

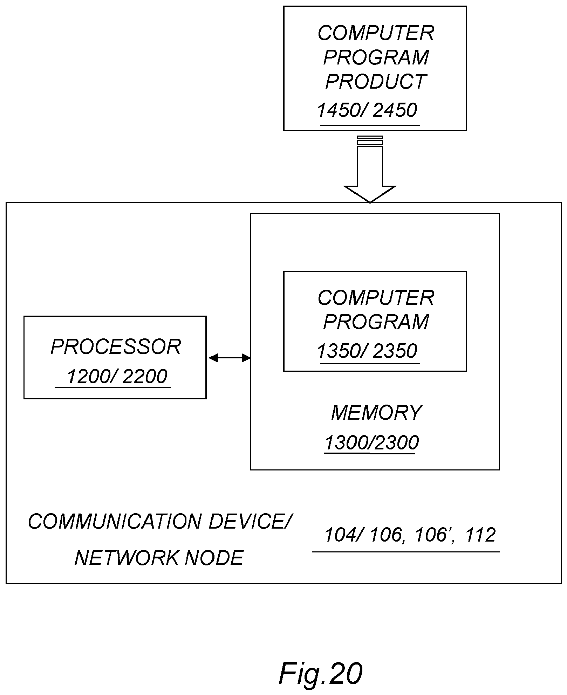

Optionally, the communication device 104 may also include communication circuitry 1100. In the example of FIG. 18 and FIG. 20, the optional communication circuit 1100 may include functions for wired and/or wireless communication with other devices and/or network nodes in the network. In a particular example, the network node may include radio circuitry for communication with one or more other nodes, including transmitting and/or receiving information. The communication circuit may be interconnected to the processor and/or memory.

The proposed technology also provides a network node 106, 106', 112 in a Radio Access Network, RAN, configured to initiate a steering of a communication device from the RAN to a target Radio Access Network, target RAN. The network node 106, 106', 112 is configured to instruct the communication device to request a second connection to the target RAN. The network node is also configured to instruct the communication device to provide the reasons for requesting the second connection.

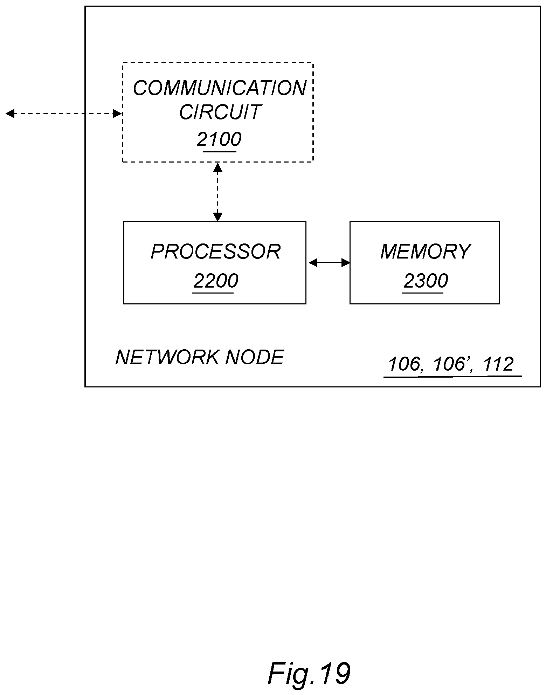

Such a network node is illustrated in block form in FIG. 19 and FIG.20. The network node 106, 106', 112 comprises a processor 2200 and a memory 2300, the memory 2300 comprising instructions, which when executed on the processor cause the processor to initiate a steering of a communication device from a source Radio Access Network, source RAN, initially serving the communication device through a first connection, to a target Radio Access Network, target RAN.

Optionally, the network node 106, 106', 112 may also include communication circuitry. In the example of FIG. 20, the optional communication circuit 2100 may include functions for wired and/or wireless communication with other devices and/or network nodes in the network. In a particular example, the network node may include radio circuitry for communication with one or more other nodes, including transmitting and/or receiving information. The communication circuit may be interconnected to the processor and/or memory.

According to yet another aspect of the proposed technology there is provided a network node 106, 106', 112 in a Radio Access Network, RAN, configured to decide whether a communication device initially connected to a source Radio Access Network, source RAN, is granted access to the RAN. The network node 106, 106', 112 is configured to receive a connection request comprising information about the reasons for the connection request and the network node is configured to decide, based at least partially on the received information about the reasons for the connection request, whether the connection request is granted and the communication device given access to the RAN. An embodiment of such a network node is schematically illustrated in FIG. 19.

In a particular embodiment of the proposed network node, in the case that the communication device was given access to the RAN, is the network node 106, 106', 112 configured to refrain, during a configurable time duration, from steering the communication device back to the initial source RAN.

Another particular embodiment of the network node, in the case that the communication device was given access to the RAN, relates to a network node 106, 106', 112 that is configured to adjust conditions for steering the communication device back to the source RAN, the conditions being adjusted to avoid steering the communication device back to the initial source RAN.

An exemplary embodiment of the network node is provided in FIG. 20. FIG. 20 illustrates a network node 106, 106', 112 for a RAN that comprises a processor 2200 and a memory 2300, the memory 2300 comprising instructions, which when executed on the processor 2200 cause the processor 2200 to decide whether a communication device initially connected to a source Radio Access Network, source RAN, is granted access to the RAN.

Optionally, the network node 106, 106', 112 may also include communication circuitry 2100. In the example of FIG. 19 and FIG. 20, the optional communication circuit 2100 may include functions for wired and/or wireless communication with other devices and/or network nodes in the network. In a particular example, the network node may include radio circuitry for communication with one or more other nodes, including transmitting and/or receiving information. The communication circuit may be interconnected to the processor and/or memory.

Below, the proposed technology will be illustrated in more detail by reference to a number of exemplary embodiments and drawings. It should be noted that these embodiments are not mutually exclusive. Components from one embodiment may be tacitly assumed to be present in another embodiment and it will be obvious to a person skilled in the art how those components may be used in the other exemplary embodiments.

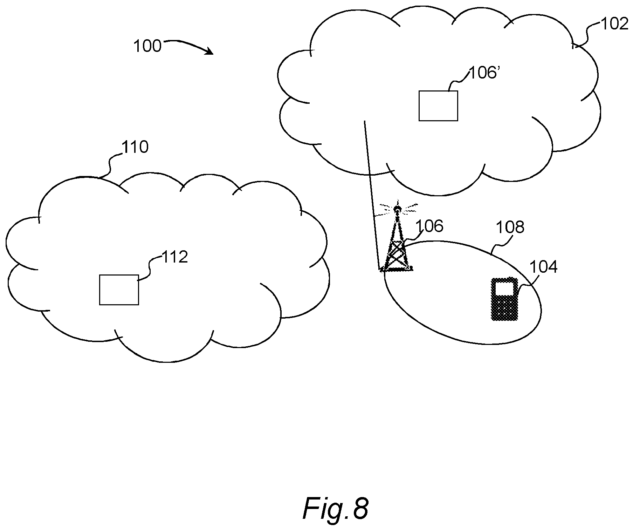

Some embodiments herein relate to a communication device, such as communication device 104 in Figure 8, having a first connection in a first RAN, such cellular RAN 102 or non-cellular RAN 110 in Figure 8. The communication device is configured to initiate or request a second connection to a second RAN, such as non-cellular RAN 110 or cellular RAN 102 in Figure 8, and to notify the second RAN about a reason for the second connection, whereby the second RAN may take an informed admission control decision in order to decide whether or not to provide the second connection.

The communication device may comprise means configured to initiate the second connection to the second RAN. Further, the communication device may comprise means configured to notify the second RAN about the reason for the second connection, by communicating with one or more network nodes, such as network node 106,106', 112 in Figure 8, comprised in the second RAN.

Some embodiments herein relate to a method in a communication device, such as communication device 104, having a first connection in a first RAN, such as cellular RAN 102 or non-cellular RAN 110. The method comprises initiating or requesting a second connection to a second RAN, such as non-cellular RAN 110 or cellular RAN 102. This may be performed by means such as an initiating module or a requesting module comprised in the communication device. The method further comprises notifying the second RAN about a reason for the second connection, whereby the second RAN may take an informed admission control decision in order to decide whether or not to provide the second connection. This may be performed by means such as a notifying module comprised in the communication device.

The method may further comprise initiating the second connection to the second RAN and notifying the second RAN about the reason for the second connection, by communicating with one or more network nodes comprised in the second RAN. This may be performed by means such as a communication module comprised in the communication device.

The means comprised in the communication device may be comprised in processing means such as a processing module. Thus, the initiating module, the notifying and/or the communication module may be comprising in the processing module.

Some embodiments herein relate to a first RAN, e.g. a first network node comprised in the first RAN, configured to instruct a communication device having a first connection in the first RAN to initiate or request a second connection to a second RAN. The first RAN may be a cellular RAN 102 or a non-cellular RAN 110, and the first network node may be cellular network node 106,106' or a non-cellular network node 112. The first RAN may further be configured to instruct the communication device to notify the second RAN, e.g. a second network node 106,106', 112 of a non-cellular RAN 110 or a cellular RAN 102, about the reason for the second connection.

Some embodiments herein relate to a method in a first RAN, e.g. in a first network node comprised in the first RAN, wherein the method comprises instructing a communication device having a first connection in the first RAN to initiate or request a second connection to a second RAN. The first RAN may further instruct the communication device to notify the second RAN about the reason for the second connection. This may be performed by means such as an instructing module comprised in the communication device.

The means comprised in first RAN, e.g. in the first network node comprised in the first RAN, may be comprised in processing means such as a processing module. Thus, the initiating module, the notifying and/or the communication module may be comprising in the processing module.

Some embodiments herein relate to a second RAN, e.g. to a second network node comprised in the second RAN, configured to receive a connection request and a reason for the connection request from a communication device and configured to take an informed admission control decision at least partially based on the reason, whereby the connection request may be granted or dismissed.

The second RAN may be a non-cellular RAN 110 or a cellular RAN 102, and the second network node may be a non-cellular network node 11 or a cellular network node 106,106'.

Some embodiments herein relate to method in a second RAN, wherein the method comprises receiving a connection request and a reason for the connection request from a communication device. This may be performed by means such as a receiving module comprised in the second RAN, e.g. comprised in the second network node. Further, the method comprises taking an informed admission control decision at least partially based on the reason, whereby the connection request may be granted or dismissed. This may be performed by means such as a decision taking module comprised in the second RAN, e.g. comprised in the second network node.

The means comprised in second RAN, e.g. in the second network node comprised in the second RAN, may be comprised in processing means such as a processing module. Thus, the decision taking module may be comprising in the processing module.

The first RAN and the second RAN may be based on different RATs. In some embodiments, one of the first and second RANs is a cellular network such as a 3GPP network and the other is a non-cellular network, such as a Wi-Fi network or another non-3GPP network.

The second connection may replace the first connection or the second connection may be in addition to the first connection.

As mentioned above the reason for the second connection is sent to the second RAN. However, additional information such as the identity of the WLAN that is redirecting the UE to 3GPP, measured signal level and other radio conditions at the time of this redirection, etc. may be sent to the second RAN. The additional information may be either included during the attachment procedure, or it may be sent upon request by the network after the attachment is performed or even before the completion of the attachment procedure.

In Figure 8, a schematic communications system 100 is illustrated. The communications system 100 comprises a first RAN 102, such as a cellular network, e.g. a 3GPP-nework, and a second RAN 110, such as a non-cellular network, e.g. a non-3GPP network.

A communication device 104 is capable of cellular communication in the first RAN 102 via a first radio network node 106, 106'. The communication device 104 located within one or more geographical area, sometimes referred to as a cell, and is served by the radio network node 106. Furthermore, the communication device 104 transmits data over a radio interface to the first radio network node 106 in an uplink (UL) transmission and the radio network node 106 transmits data to the communication device 104 in a downlink (DL) transmission. The first radio network node 106, 106' may be a base station such as an eNB, an eNodeB, Node B or a Home Node B, a Home eNode B, a radio network controller, a base station controller, an access point, a relay node which may be fixed or movable, a donor node serving a relay, a GSM/EDGE radio base station, a Multi-Standard Radio (MSR) base station or any other network unit capable to serve a wireless device or another radio network node comprised in the first network 102.

The communication device 104 may further be configured to communicate in the second RAN 110. The communication device 104 may be configured to communication in the second RAN 110 via a second radio network node 112. The second radio network node 112 may be an access point such as a WLAN access point.

Embodiments herein comprise one or more modules configured to realise features and to perform actions described herein.

### Advantages of embodiments

By communicating that the communication device is coming to a target network because of steering and/or redirection from a source network (e.g. from 3GPP to WLAN (and vice versa)), the target network is allowed to enforce mechanisms to avoid ping pongs among the two networks.

One way of allowing some kind of coordination between steering mechanisms on the WLAN side and steering mechanisms on the 3GPP network side would be to indicate to the different Radio Access Technologies (RAT's) that steering has occurred; i.e., that the cause for an access request in either RAT is a result of a steering instruction from the other RAT. In this way, it would be possible to consider this information in the target RAT and take actions that, when possible, may prevent ping-ponging instructions to the UE.

Embodiments herein propose a method for the communication device, e.g. mobile terminal, to inform the RAT, it is currently requesting connection to, about the reason for that connection. The reason for the connection could for example be that the mobile terminal has been steered from another RAT.

To facilitate the understanding of the concepts of the proposed technology, the following section provides an outline of various connection procedures used. Although reference will mainly be made to a User Equipment, UE, from a 3GPP perspective, and a "STA" from a WLAN perspective it should be understood that the terms "STA", "UE", "communication device" and "wireless device" can be used interchangeably.

### Initial Connection to WLAN

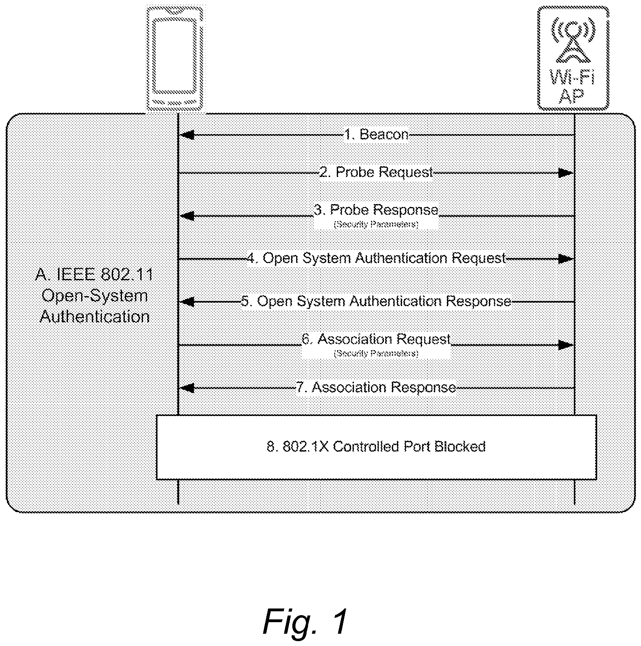

When connecting to WLAN, the communication device STA may first perform an Open-System Authentication procedure, as depicted in Figure 1. Later, this procedure is followed by EAP authentication and Four-way handshake, but those do not relate to embodiments herein and therefore are not depicted in the figure.

The detailed description of the steps shown in Figure 1 are given in the text below:
1. The communication device STA receives a Beacon frame revealing, among other parameters, the security features associated with the Extended Service Set (ESS) the access point AP belongs to. The description of ESS is described in Chapter 4.3.4.2 in reference [2].The format of the Beacon frame as well as all the information elements it carries are described in Chapter 8.3.3.2 of IEEE 802.11 [1].
2. If the communication device STA does not receive a Beacon frame for some reason, it may generate a Probe Request and send it to the access point AP. This procedure is called active scanning and by performing it, the STA may receive from the access point AP the same information as it would have from a Beacon message. The Probe Request frame is described in Chapter 8.3.3.9 of IEEE 802.11 [1];
3. The access point AP answers with Probe Response - IEEE 802.11 [1], Chapter 8.3.3.10;
   a. NOTE: The discovery procedure consists of either step 1 or steps 2 and 3, i.e., receiving a Beacon frame and exchanging probe messages are mutually exclusive;
4. The communication device STA sends an Open System Authentication Request as defined in Chapter 11.2.3.2 of IEEE 802.11 [1];
5. The access point AP responds with an Open System Authentication Response;
6. The communication device STA then sends an Association Request, indicating the security parameters to be used later;
7. The access point AP responds with an Association Response
   a. NOTE: The Open System Authentication does not provide any security. The connection between the communication device STA and the AP is secured at a later point, by means of Authentication and Key Agreement procedure. Nevertheless, a possible attack altering the security parameters in the Open System Authentication message exchange will be detected at the stage of key derivation;
8. At this point the Open System Authentication is completed and the communication device STA may communicate only with the access point AP - the rest of the traffic is blocked by the Port-Based Network Control (PBNC) enforcer, as defined in IEEE 802.1X [2]. Some of the traffic towards external hosts, however, may be forwarded by the AP, as in the case of the communication with the RADIUS server.

### Initial Connection to 3GPP

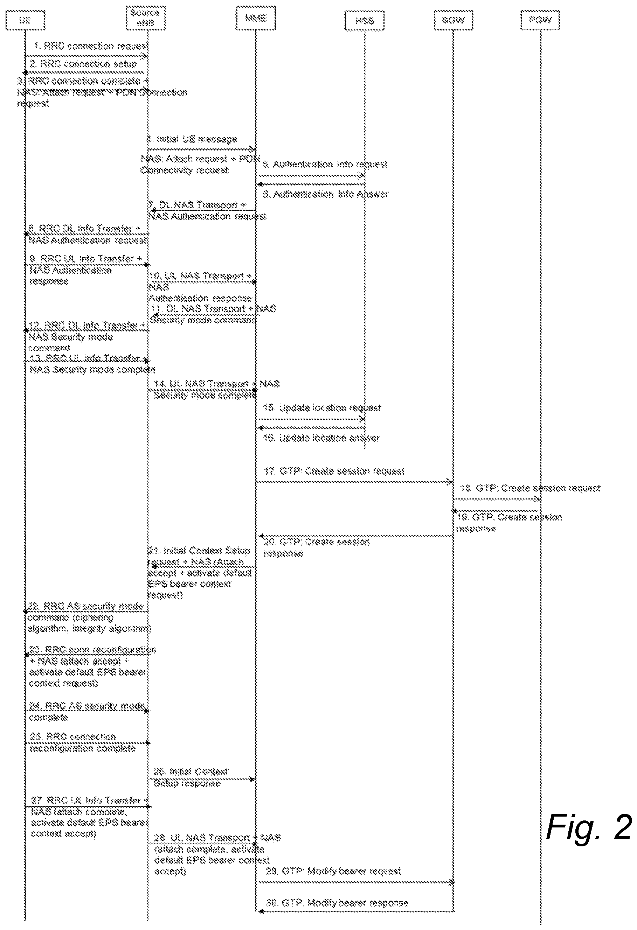

The LTE attachment procedure is depicted in Figure 2. Reference is made to following reference documents for the details of the messages: TS 36.331 for the Radio Resource Control (RRC) messages between a communication device, such as a user equipment (UE), and a base station (eNB); TS 36.413 for the S1 - AP messages between eNB and Mobility Management Entity (MME); TS 29.272 for the diameter messages between the MME and Home Subscriber Server (HSS); TS 29.274 for the GTP-Control plane (GTP-c) messages between the MME, Serving GateWay (SGW) and Packet Data Network GateWay (PGW); TS 24.301 for NAS level communication between the MME and UE; and TS 33.401 for messages related to security. As illustrated in Figure 2, the LTE attachment procedure comprises the following steps:
1. The user equipment UE sends an RRC connection setup request to the base station eNB. This includes a UE identity, either the SAE Temporary Mobile Subscriber Identity (S-TMSI, if the UE is already registered or a random value otherwise), and a cause value for the setup request (e.g. emergency, mobile originated call, etc.)
2. The eNB responds with RRC Connection Setup message that includes initial configuration parameters for signaling radio bearers, physical channels, power control, etc.
3. The UE goes into RRC_Connected mode and responds with RRC Connection Setup Complete message to the eNB. Since in this case the RRC connection is intended for attachment purposes, the message also contains the NAS messages "Attach Request" and "Packet Data Network (PDN) connectivity request" that are intended for the MME.
4. The eNB extracts the Non-Access Stratum (NAS) messages from the RRC Connection Setup Complete message and forwards these to the MME using the S1-AP Initial UE Message.
5. The MME sends an Authentication Info Request message, which includes the IMSI, PLMN ID, towards the HSS.
6. If the HSS finds subscription information for the indicated IMSI, it returns the authentication-Info AVP (Attribute Value Pair), which for the case of LTE contains the parameters RAND (random number), XRES (expected user response), AUTN (Authentication) and K_{ASME} (Key Access Security Management Entity). RAND and AUTN are challenge parameters to be used by the UE to calculate response which is later on to be compared with XRES by the MME, while K_{ASME} is the root key that is to be used for EPS integrity protection and ciphering key hierarchy.
7. The MME sends the NAS authentication request towards the UE transparently via DL NAS transport message to the eNB.
8. The eNB passes on the NAS authentication request towards the UE.
9. The UE executes AUTHENTICATE command in USIM application to get RES Result) and CK (Ciphering Key), and sends the RES towards the MME using a NAS authentication response transparently via the UL Information transfer message towards the eNB.
10. The eNB passes on the NAS authentication response message towards the MME.
11. MME compares the RES with XRES that was received in message 6 from HSS. If there is a match, the authentication (AKA) procedure is successful and the MME sends back a NAS security mode command towards the UE via the DL NAS transport message to the eNB. The security mode command contains parameters that will be used for securing future NAS messages between the UE and MME.
12. The eNB passes on the NAS security mode command from the MME to the UE using RRC DL information transfer message.
13. If the security mode command may be accepted by the UE (after the UE performs integrity check for the message and that the received replayed UE security capabilities and the received nonce_{UE} (nonce is the term used in cryptography to describe a number that is used only one during authentication/encryption/ cyphering etc.) have not been altered compared to the latest values that the UE sent to the network), the UE responds by sending NAS security mode complete message encapsulated in RRC UL Information transfer message toward the eNB.
14. The eNB passes on the NAS security mode complete message to the MME using the UL NAS transport message.
15. The MME sends an Update Location Request message, which contains information such as IMSI, PLMN ID, RAT type, to inform the HSS about the identity of the MME currently serving the user, and optionally to provide the HSS with other user data, such as terminal Information or UE Single Radio Voice Call Continuity (SRVCC) Capability.
16. The HSS checks whether subscription data exists for the IMSI and if so responds with an Update Location Answer that includes the subscription info of the concerned user.
17. The MME does the SGW/PGW selection and sends a create session request message to the selected SGW, which includes detailed information for the session to be created such as the IMSI of the UE, APN, PGW S5/S8 address/Fully Qualified Tunnel End Point Identifier (F-TEID), PDN type, Evolved Packet Core (EPS) Bearer ID, Default EPS Quality of Service (QoS), Aggregate Maximum Bit Rate, PDN address, etc.
18. The SGW passes on the create session request message to the PGW (including an additional info regarding the SGW User plane Tunnelling End Identity (TEID))
19. The PGW uses the QoS policy for the UE (local or received from PCRF) to determine a list of bearers (default + optional dedicated). Then it responds with a Create Session Response message to the SGW that includes detailed information about the created session such as PDN address, Aggregate Maximum Bit Rate, and Default/Dedicated bearer contexts. Now DL data may flow from the PGW to the correct SGW.
20. The SGW passes on this create session response to the MME
21. The MME has now everything in place to instruct eNB to start Initial Context Setup procedures. It create the S1 UE context {S1AP ID, Bearer ID, TEIDs} and also derive the security key K_{eNB} from the K_{ASME} and sends Initial Context Setup Request message towards the eNB that contain detailed info such as UE S1AP ID, Aggregate Maximum Bit Rate, default/dedicated bearer context, UE Security Capabilities, KeNB). The context setup request also contains two NAS PDUS: EMM Attach Accept and Activate Default EPS Bearer Context Request
22. The eNB performs Radio Resource Management (RRM) procedures to admit the EPS bearer, create S1 UE context, inform GTP-U about Bearer ID-Tunnel ID mapping and initiate further RRC procedures. The first RRC procedure is Access Stratum (AS) Security procedure (AS security mode command) to start Ciphering and Integrity protection, where the eNB uses K_{eNB} to derive user plane data encryption (K_{UPenc}) as well as encryption & integrity keys for control plane (RRC) data (K_{RRCenc} and K_{RRCint}, respectively).
23. The eNB also sends an RRC conn reconfiguration message that contains detailed information to configure the radio bearers and associated PDCP/RLC/MAC/PHY entities. The NAS attach accept and activate default EPS bearer context request that were received from the MME in message 21 are also included in this message.
24. Upon the reception of the AS security mode command, the UE also derives the keys K_{UPenc}, K_{RRCint}, and K_{RRCenc} from K_{eNB} to start Ciphering and Integrity protection. The UE sends an RRC AS security mode complete message to the eNB.
25. Upon the reception of the RRC conn reconfiguration message, the UE applies the included configurations and sends an RRC conn reconfiguration complete message.
26. The eNB sends an Initial context setup response towards the MME, which includes the list of successfully setup E-RABs and also failed ones (if any).
27. The UE uses an RRC UL Information transfer message to send the NAS responses Attach complete and activate default EPS bearer context accept messages (in response to the NAS parts of 21/23). UL data may now flow properly to the serving eNB.
28. The eNB transparently forwards the NAS messages contained in message 27 toward the MME using the UL NAS transport message
29. The MME triggers GTP-C procedure towards SGW to inform eNB related details to SGW. This is done by using the Modify Bearer Request message
30. The SGW responds with the Modify Bearer Response message confirming the request was accepted. DL user data now may flow from the SGW towards the correct eNB.

After message 30, the LTE initial attach procedure is complete. The UE is attached, RRC-Connected, EMM-Registered, ECM-Connected state and the default bearer as well as dedicated (if any) bearers are activated.

### Rel-12 3GPP RAN level integration

RAN level integration that is able to provide more operator control, enhanced user experience and system performance/utilization is required as operator controlled WLAN deployments become more common and WLAN usage increases. In order to address this RAN level integration, a Study Item (SI) was proposed in the 3GPP plenary meeting #58 that addresses the issue of operator deployed and/or controlled WLAN and 3GPP interworking at RAN level [3]. The main aim of the SI was to find solutions that address the under-utilization of operator deployed WLANs, sub-optimal UE performance while connected to WLAN and battery drainage due to unnecessary WLAN scanning. Three solutions were proposed during the study item phase as described in [4], named solutions 1, 2 and 3.

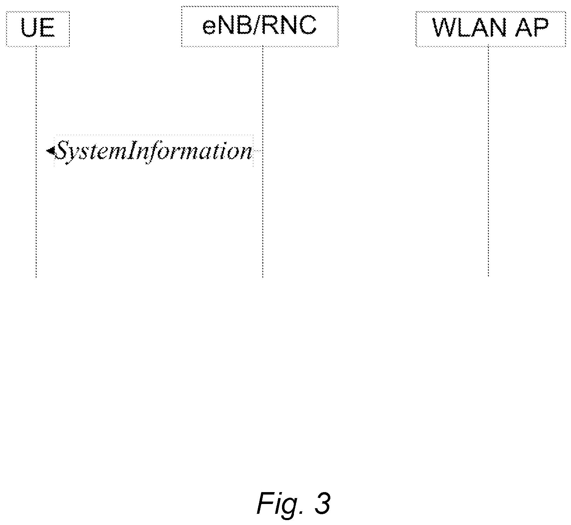

Solution 1 is a communication device, UE, based solution, i.e. the UE makes a final steering decision, where the Access Network Discovery and Selection Function (ANDSF) is enhanced with additional policies that uses 3GPP RAN assistance information provided to the UE through broadcast signaling and optionally dedicated signaling, as illustrated in Figure 3. If there are no ANDSF policies deployed or the UE doesn't support it, then an enhanced proprietary Wi-Fi-if-coverage mechanism is used. The main assistance information provided to the UE is the RAN load: percentage load, load levels e.g. low load, medium load, high load, and offload preference indicator, etc. Additionally or alternatively information such as maximum expected resource allocation for a UE on 3GPP, WLAN thresholds, e.g. Received Signal Strength Indicator Levels (RSSI), or AP/BSS Load Thresholds. 3GPP Reference Signal Received Power (RSRP)/ Received Signal Code Power (RSCP) thresholds that have to be fulfilled for traffic steering decisions.

The decisions are based on the RAN assistance information, UE measurements, information provided by WLAN and policies, e.g. conditions, that are obtained via ANDSF or via other Open Mobile Alliance Device Management (OMA-DM) mechanisms or pre-configured at the UE to steer traffic to WLAN or to RAN. For example, ANDSF Inter-System Routing Policy (ISRP) rules may be enhanced to utilize the RAN assistance and WLAN provided information:
- If RAN RSRP is less than a first threshold, threshold s, and RAN direct load is greater than a second threshold, threshold x, and if WLAN RSSI is greater than a third threshold, threshold r, and WLAN BSS load is less than a fourth threshold, threshold y, move flow to WLAN
- If RAN RSRP is greater than threshold s' and RAN direct load is less than threshold x', and if WLAN RSSI is less than threshold r' and WLAN BSS load is greater than threshold y', move flow to UMTS/LTE
The value of the thresholds, e.g. RAN RSRP/RSCP thresholds, may also be provided by the ANDSF itself rather than included in the RAN assistance information.

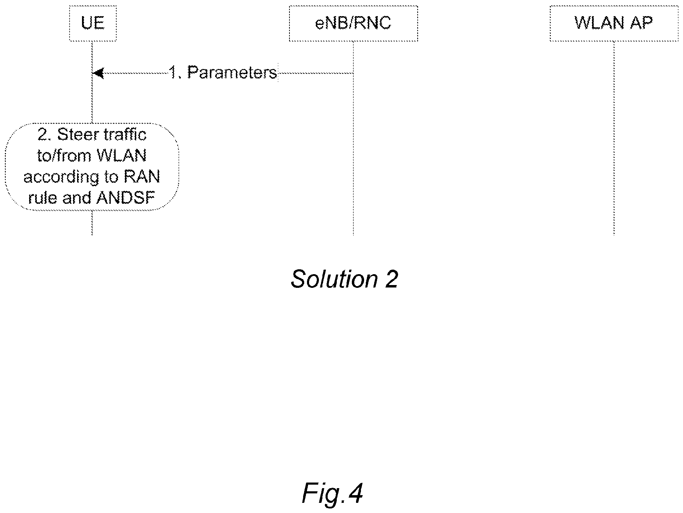

Solution 2 follows principles similar to the IDLE mode operations in 3GPP, where the communication device, UE, follows RAN specified rules to perform cell (re-) selection. The RAN provides (e.g. through dedicated and/or broadcast signaling) thresholds which are used in the rules, as illustrated in Figure 4.
Below are a couple of examples of RAN rules to be specified for solution 2:
- If measured_metric_A is less than threshold1 and measured_metric_B is greater than threshold2, move flow to WLAN
- If measured_metric_A is greater than threshold3 and measured_metric_B is less than threshold4, move flow to 3GPP

In the examples above threshold1 to threshold4 are part of the parameters that are communicated from the RAN, measured_metric_A to measured_metric_B are measurement values the UE has gathered and the rules themselves are to be specified in RAN specifications. In additions to the RAN rules, ANDSF rules may also be used, e.g. for flow based traffic steering via ISRP.

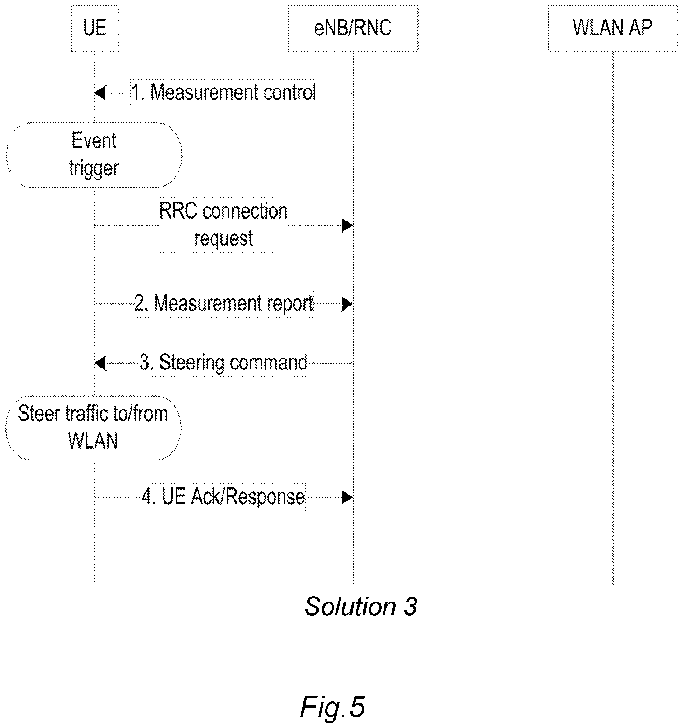

Solution 3 follows principles similar to CONNECTED mode operations in 3GPP, where the following three main steps are employed for traffic steering, as illustrated in Figure 5:
1. **Measurement control configuration:** the RAN sends information to the communication device, UE, that comprises details like the target WLAN(s) to be measured, e.g. specific identities such as SSIDs/BSSIDs/HESSIDs or more general information like operating frequencies, and events/thresholds for triggering measurement reports, e.g. when WLAN signal becomes better/worse than a certain threshold, WLAN signal becomes better/worse than a certain threshold and 3GPP signal becomes worse/better than another threshold, etc..
2. **Measurement reporting:** When the conditions for triggering thresholds, as configured in Step 1 above, are fulfilled, the UE sends a measurement report to the 3GPP RAN.
3. **Traffic steering:** Based on the measurement report received in Step 2, the RAN evaluates the received measurements and other relevant information obtained in eNB/RNC and as a result of this sends a traffic steering command to the UE, which may specify the traffic to be steered. This may be explicit indication of each bearer to be moved, i.e. by specifying DRB/RB-IDs, or more general like the QoS Class Identifier (QCI), which may apply to many bearers at once.
4. **UE ACK/Response:** In this step the UE indicates to the RAN whether or not the action dictated by the traffic steering command was successfully performed or not.
UEs in IDLE mode may request to setup an RRC connection for the sake of sending measurement reports when the conditions of Step 1 are satisfied. Alternatively, solution 1 or 2, which are equally applicable to both IDLE and CONNECTED UEs, might be employed for handling IDLE UEs while solution 3 is used only for CONNECTED UEs.

In the RAN #62 plenary meeting, a decision was made to go forward with a Work Item (WI) that proposes a solution that is a mixture of solution 1 and 2 [5]. The objective of this work item is to specify mechanism for WLAN/3GPP access network selection and traffic steering consisting.

For the Access Network Selection part:
- Selected RAN assistance parameters transferred via system broadcast and/or dedicated signalling used within:
   ∘ RAN rules defined within RAN Working Group (WG) specifications in case enhanced ANDSF is not deployed in the network or not supported by the UE.
   ∘ ANDSF policies in case enhanced ANDSF is deployed in the network and supported by the UE.
- RAN assistance information may be enhanced with WLAN identifiers in case ANDSF is not deployed or not supported by the UE.

For the Traffic Routing part:
- Selected RAN assistance parameters transferred via system broadcast and/or dedicated signalling used within:
   ∘ RAN rules specified in RAN2 WG specifications in case enhanced ANDSF is not deployed or not supported by the UE.
   ∘ ANDSF policies in case enhanced ANDSF is deployed in the network and supported by the UE.
- RAN assistance information may be enhanced with traffic routing information, e.g. offload granularity in case ANDSF is not deployed or not supported by the UE.

### Traffic steering from WLAN to 3GPP

The WLAN access point AP and the cellular base station may be co-located, e.g. in an integrated picocell, or may be separate Wi-Fi APs "under" a macro cellular base station. The cellular and Wi-Fi networks are authenticated by the same operator. Both networks are typically, but not necessarily, deployed by the same operator looking to offload or maximize user experience.

### Wi-Fi → Cellular Steering at Association

A multi-mode station (STA) (multi-mode STA may be considered as the equivalent term for UE in the WLAN world), having both Wi-Fi radio(s) and cellular radio(s), attempts to associate to an access point AP. The AP has knowledge of e.g. its current load, the interference situation, U/L signal strength at the AP and AP network connection status. Because of one or more of these parameters, the AP decides not to accept the newly joining STA. and to explicitly steer the multi-mode STA to a network that could provide a better service - in this case a cellular network. In that way, the Wi-Fi load is not further aggravated and the user experience is maintained or improved.

### Wi-Fi → Cellular Steering Post Association

A multi-mode STA is already associated to an access point AP. The AP has knowledge of e.g. its current load, the interference situation, U/L signal strength at the AP and AP network connection status. At a certain point in time, one or more of these parameters reach an unacceptable level. Then the AP is able to explicitly steer the multi- mode STA to a network that could provide a better service - in this case a cellular network. In that way, the Wi-Fi load is alleviated and the user experience is maintained or improved.

The cellular and Wi-Fi networks are authenticated by the same operator. Both networks are typically, but not necessarily, deployed by the same operator looking to offload or maximize user experience.
The following commonly terminologies are used in embodiments and are elaborated below:
Radio network node: In some embodiments the non-limiting term radio network node is more commonly used and it refers to any type of network node serving UE and/or connected to other network node or network element or any radio node from where UE receives signal. Examples of radio network nodes are Node B, base station (BS), multi-standard radio (MSR) radio node such as MSR BS, eNode B, network controller, radio network controller (RNC), base station controller, relay, donor node controlling relay, base transceiver station (BTS), access point (AP), transmission points, transmission nodes, RRU, RRH, nodes in distributed antenna system (DAS) etc.

Network node: In some embodiments a more general term "network node" is used and it may correspond to any type of radio network node or any network node, which communicates with at least a radio network node. Examples of network node are any radio network node stated above, core network node (e.g. MSC, MME etc), O&M, OSS, SON, positioning node (e.g. E-SMLC), MDT etc.

User equipment: In some embodiments the non-limiting term user equipment (UE) is used and it refers to any type of wireless device communicating with a network node in a communication system. Examples of UE are target device, device to device UE, machine type UE or UE capable of machine to machine communication, PDA, iPAD, Tablet, mobile terminals, smart phone, laptop embedded equipped (LEE), laptop mounted equipment (LME), USB dongles etc.

The embodiments herein also applies to the multi-point carrier aggregation systems. Note that although terminology from 3GPP LTE has been used in this disclosure to exemplify the embodiments herein, this should not be seen as limiting the scope of the embodiments herein to only the aforementioned system. Other wireless systems, including WCDMA, WiMax, UMB and GSM, may also benefit from exploiting the ideas covered within this disclosure.

Also note that terminology such as eNodeB and UE should be considering non-limiting and does in particular not imply a certain hierarchical relation between the two; in general "eNodeB" could be considered as device 1 and "UE" device 2, and these two devices communicate with each other over some radio channel. It should be understood that even if wireless transmissions in the downlink is described, embodiments herein are equally applicable in the uplink.

In this section, the embodiments herein will be illustrated in more detail by a number of exemplary embodiments. It should be noted that these embodiments are not mutually exclusive. Components from one embodiment may be tacitly assumed to be present in another embodiment and it will be obvious to a person skilled in the art how those components may be used in the other exemplary embodiments.

Throughout this description, WLAN and 3GPP are used as example networks for illustrative purposes only, the general idea of all embodiments are applicable to steering between a cellular network, such as a 3GPP network, and other non-cellular network, such as other non-3GPP networks, based on technologies other than WLAN.

### 6.1 Notifying the non-3GPP RAN about the reason for the connection

Embodiments herein comprises the case when a terminal 104, cf Figure 8, that already has e.g. a 3GPP connection in a 3GPP network 102, initiates a connection to a WLAN network 110. In this case it may be beneficial if the terminal 104 notified the WLAN network 110 about the reason for the connection so that the WLAN network 110 may take an informed admission control decision. Thereby, the WLAN network 110 may decide whether or not the connection should be allowed or dismissed. Furthermore, the reason for the connection may also include considerations whether the terminal 104 is replacing its current access or is adding an access. If the terminal 104 is replacing its current access that means that a terminal 104 that is moving from e.g. 3GPP to WLAN will not have a 3GPP connection after the move. If the terminal 104 is adding an access that means that a terminal that is moving from e.g. 3GPP to WLAN is connecting to WLAN, but will keep its on-going 3GPP connection too. Different methods for implementation will be described herein.

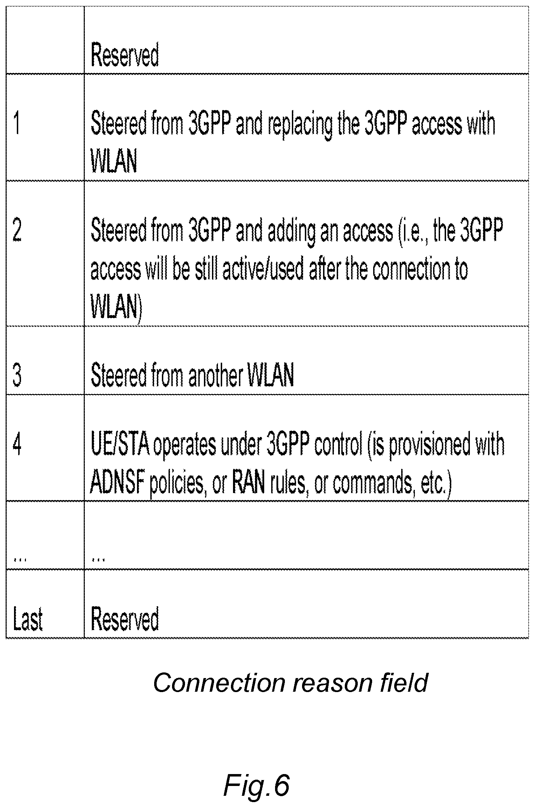

In some embodiments, the mobile terminal 104 upon connecting to the WLAN 110 informs the WLAN about the reason for connection. One way to implement this is to introduce a new information element (Connection reason) to the Probe Request, Association and Reassociation Request and Authentication Request frames as defined in [1]. The information element carries information regarding the reason for connection. There may be several different reasons that the STA 104 may provide. Some examples are given in the table illustrated in Figure 6.

As illustrated in Figure 6, the information element "0" carries the information "reserved", e.g. it should not be used, the information element "1" carries the information "steered from 3GPP and replacing the 3GPP access with WLAN", the information element "2" carries the information "steered from 3GPP and adding access (i.e., the 3GPP access will be still active/used after the connection to WLAN)", the information element "3" carries the information "steered from another WLAN", the information element "4" carries the information "UE/STA operates under 3GPP (is provisioned with ADNSF policies, or RAN rules, or commands, etc.)" and the information element "Last" carries the information "reserved".

There are several ways to introduce the new element. Here we are going to divide the methods regarding whether the new element is introduce in the IEEE standard, or as WFA-specific element.

### 6.1.1. Introducing the "Connection reason" in the IEEE

One exemplifying way of introducing the "Connection reason" may be to define a new Management frame body component (and namely a field that is not an information element, as all the fields described in 8.4.1 of [1]). The new field may be called "Connection reason" and comprise the information shown on Figure 6. Then the "Connection reason" field may need to be included in the following frames:
- Probe Request - as order 26 or higher
- Association Request - as order 19 or higher
- Reassociation Request - as order 24 or higher
- Authentication Request - as order 16 or higher

Another exemplifying way of introducing the "Connection reason" information may be to include the new information to an already existing field. For example, such a field may be the "Status code" (described in 8.4.1.9 of [1]). In that case, all the information shown in Figure 6 may be comprised and come as an extension to the already existing list of information fields in the "Status code" field. Furthermore, the "Status code" field may have to be added to the following frames":
- Probe Request - as order 26 or higher
- Association Request - as order 19 or higher
- Reassociation Request - as order 24 or higher

Please note that the "Authentication Request" frame may already comprise the "Status code" field.

### 6.1.2 Introducing the "Connection reason" in WFA

If the "Connection reason" is introduced in WFA, then the "Vendor Specific" information element (as defined in 8.4.2.28 of [1]) may have to be used and then this "Connection reason" field may have to be added to the Probe Request, Association and Reassociation Request and Authentication Request frames.

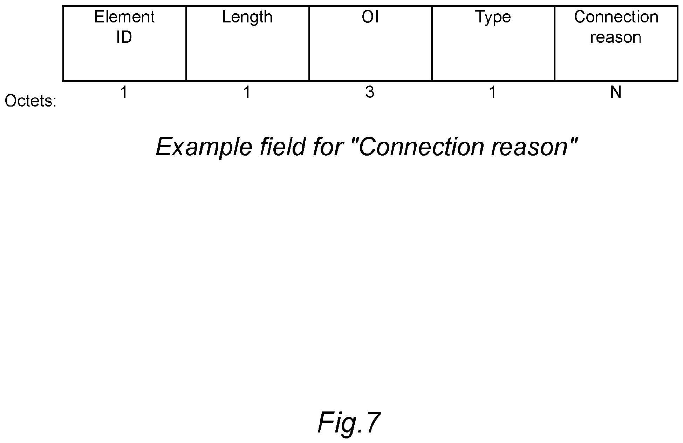

Figure 7 shows an example of how the "Connection reason" information may be comprised in the vendor-specific information element. In this case, the "Element ID" field may be a 1-octet field whose value may be the value for vendor specific information elements (value 221) (see Table 7-26 in [1]). The "Length" field may be a 1-octet field whose value may be set to "4 + N". The OI may be a 3-octet field and may be defined in section 8.4.2.71.5 in [1]. The "OI" field may be set to the value 0x 50 6F 9A, as used by the Wi-Fi Alliance. The "Type" field may be a 1-octet field set to a value defined by the WFA. The "Connection reason" field may be one of the values shown in Figure 6.

### 6.2 Notifying the 3GPP RAN about the reason for the connection

This part is the counter-part of the Section 6.1 and it comprises the case when a terminal 104, that already has a WLAN connection, initiates a connection to a 3GPP network 102 or goes back to the 3GPP network 102. In this case it would be beneficial if the terminal 104 notified the 3GPP network 102 about the reason for the connection so that the 3GPP network may take an informed admission control decision in order to decide whether or not the connection should be granted. Furthermore, the reason for the connection may also include considerations whether the terminal 104 is replacing its current access (i.e., it is moving from WLAN 110 to 3GPP 102 and will not have a WLAN connection after the move) or is adding an access (i.e., the terminal is connecting to 3GPP, but will keep its on-going WLAN connection too).

For example, if a UE steers all its traffic to WLAN, i.e. no more PDN connection via LTE, then it gets detached from LTE. After a while, the WLAN AP/AC may redirect the UE towards LTE. That may for example be the case when the WLAN is overloaded in order to give more resource to a high QoS profile UE, or when shutting down the WLAN AP due to detected radar activity, other proprietary reason by the operator, etc.

On the other hand, if there is some PDN connection via LTE, the UE may be either in IDLE or CONNECTED mode in LTE, when the WLAN steers the UE back to 3GPP for similar reasons as in above.

If the UE was detached when it receives a steering command from WLAN, a new attachment cause (e.g. "Steered from WLAN (3GPP as a replacement)" or "Steered from WLAN (3GPP as an additional access)") may be communicated during the attachment procedure so that the 3GPP network will know the reason why this UE is re-attaching. Apart from the reason code, additional information such as the identity of the WLAN that is redirecting the UE to 3GPP, measured signal level and other radio conditions at the time of this redirection, etc. may be included. The additional information may be either included during the attachment procedure, or it may be sent upon request by the network after the attachment is performed or even before the completion of the attachment procedure. There are several possibilities as to which message(s) may carry the attachment cause and additional information. For example, the Attach Request message (see 3GPP TS 23.401) of the initial attachment procedure comprises an Attach Request towards the MME as well as RRC parameters that are used to identify the MME. The RRC parameters part of this message may be enhanced to comprise the attachment cause as well as the additional information. Another alternative may be to comprise the information in the Attach Request part (which is transparently passed on to the MME), and the MME communicates it back to the eNB in the Initial Context Setup Request message).

If the UE is in IDLE mode in 3GPP and WLAN tells it to steer towards 3GPP, the UE has to first setup an RRC connection, and a new establishment cause ((e.g. "Steered from WLAN (3GPP as a replacement)" or "Steered from WLAN (3GPP as an additional access)") may be included during this procedure. After the RRC connection is established, additional information such as the identity of the WLAN that is redirecting the UE to 3GPP, measured signal level and other radio conditions at the time of this redirection, etc. may be provided upon request from the 3GPP network. The RRC connection establishment procedure may also be used (either fully or partially) to communicate the information for the detached UE case described above as the UE has to setup an RRC connection anyways before sending the attach request message. Another alternative may be to use the UE triggered Service Request Procedure (see 3GPP TS 23.401) after the RRC connection is setup where the establishment cause and additional information is communicated in the RRC message that comprises the Service Request NAS message, or it may be part of the NAS message, and later on communicated from the MME towards the eNodeB in the Initial Context Setup Request message.

If the UE is in CONNECTED mode, it already has an RRC connection up and running, and the effect of the steering command will be the UE trying to set up a PDN connection to route the steered traffic to 3GPP, which may be done via the UE initiated PDN connectivity procedure (see 3GPP TS 23.401). The information, i.e. steering cause and the optional additional information discussed above, may be comprised in the PDN Connectivity Request message (which is transparently sent to the MME) and then communicated back to the eNB in the Bearer Setup Request message.

Note that instead of, or in addition to, the enhancement of existing messages to communicate steering cause values and additional information, new messages maybe defined to communicate this information.

If the 3GPP to WLAN steering mechanism is fully network controlled, i.e. the network sends explicit commands to the UE telling it to steer to WLAN, then what may happen is (without the information about the reason why the UE is reattaching/connecting/establishing PDN connection in 3GPP) is that the UE may end up being commanded to be steered to WLAN again after a while. When the 3GPP network gets this information, i.e. steering cause and additional information (if any), it may make special considerations when it comes to steering this UE back to WLAN again. For example:
- The 3GPP network refrains from sending the UE to WLAN for configurable time duration even if the steering conditions for this UE are fulfilled. The timeout from steering to WLAN may be applicable to any WLAN or if the information about the identity of the AP that the UE is steered from is provided, then it may be applicable only to the specific AP (e.g. BSSID was provided) or any AP belonging to the same WLAN (e.g. SSID/HESSID was provided). The timeout value may be scaled depending on the additional information received (e.g. measurement report).
- The 3GPP network may adjust the thresholds/conditions for steering that particular UE to WLAN. For example, the measurement reporting triggering conditions may be scaled in such a way that the UE will report measurement reports (which may then trigger steering commands) only if the conditions on WLAN become considerably better or the 3GPP conditions become considerably worse than the configuration for UEs who (re)attached without being steered from WLAN.

If the 3GPP to WLAN steering mechanism is network assisted, i.e. network specifies conditions/thresholds, upon the fulfillment of which the UE steers to WLAN, a similar scenario may arise immediately after the UE has steered back to 3GPP, i.e. the conditions to steer back to WLAN are fulfilled and UE tries to go back to the WLAN that just steered it to 3GPP. The new steering cause value and other additional information such as the re-directing WLAN identity etc. discussed above may also be employed in this case. When the 3GPP network gets this information, it may modify the steering thresholds/conditions for the concerned UE to prevent the ping ponging. For example:
- The 3GPP network may command the UE not to steer to WLAN for configurable time duration. One way of achieving this is to configure the UE with thresholds/conditions to steer to WLAN that will most likely will not be met (e.g. very high WLAN RSSI or extremely low 3GPP RSRP thresholds), and change the thresholds/conditions back to normal values after the required time has expired. Another possibility is to introduce a new message explicitly telling the UE to refrain from steering to WLAN. As in the case of fully network controlled case discussed above, the timeout from steering to WLAN may be applicable to any WLAN or if the information about the identity of the AP that the UE is steered from is provided, then it may be applicable only to the specific AP (e.g. BSSID was provided) or any AP belonging to the same WLAN (e.g. SSID/HESSID were provided). The timeout value may be scaled depending on the additional information received (e.g. measurement report).
- The 3GPP network may adjust the thresholds/conditions for steering that particular UE to WLAN. For example, the RSRP threshold may be scaled down or/and the RSSI threshold may be scaled up in such a way that the likelihood of the UE going back to WLAN is reduced as compared to UEs who (re)attached without being steered from WLAN.

Concerning the case of a UE that is detached from 3GPP, some embodiments comprise that a UE upon being completely steered to WLAN and detached from 3GPP gets a conditional attachment configuration which provides to the UE thresholds and/or conditions telling the UE when to re-attach to 3GPP. If such a method is in effect, then the steering command from WLAN might not come to effect if it happens that the thresholds/conditions are not fulfilled at that time. Thus, when the UE gets a steering command from WLAN to go to 3GPP and notices that it is configured with conditional attachment thresholds, it may resolve the contradiction in several ways. For example:
- The steering command from WLAN overrides the conditional attachment configurations, and UE tries to attach immediately.
- The conditional attachment thresholds and/or conditions are scaled in such a way that re-attachment becomes more likely
- Unless de-authenticated/de-associated from the WLAN, the UE may ignore the steering commands from WLAN until such an instant that the conditional attachment thresholds that are given from 3GPP steering would also be fulfilled. In some embodiments, this may even be indicated to the WLAN access point/steering mechanism, for example together with a request to the WLAN AP to remain in WLAN.

Note that in the exemplifying descriptions above, two exemplary cause values, i.e. "Steered from WLAN (3GPP as a replacement)" or "Steered from WLAN (3GPP as an additional access)" were used. Another alternative may be to have only one cause value, i.e. "Steered from WLAN", and then include the information whether the UE still has the WLAN active in the additional information provided by the UE.

The reason for differentiating the cases where the UE still has WLAN active or not may be to let the 3GPP network make admission control considerations depending on whether the 3GPP access link is the only one available for that UE at that time or the UE may have a fallback in WLAN if the UE is not admitted to 3GPP.

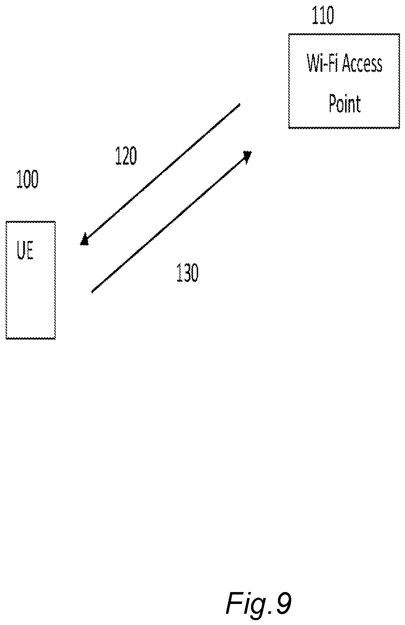

Some exemplifying embodiments will now be described with reference to Figures 9-11.

**Figure 9** schematically illustrates a wireless terminal UE 100 able to communicate over the 802.11 specified protocols towards a Wi-Fi access point 110. The downlink communication 120 is directed from the Wi-Fi access point 110 to the UE 100 and the uplink communication 130 is directed from the UE 100 to the Wi-Fi access point 110.

For the UE to find an access point to connect to, a beacon signal is transmitted from the Wi-Fi access point. This beacon signal indicates details about the access point and provides the UE with enough information to be able to send a request for access. Accessing a Wi-Fi access point includes an information exchange between UE 100 and Wi-Fi Access point 110, comprising, e.g., probe requests and response, authentication requests and response. The exact content of these sequences are omitted for clarity. In addition, the UE may also request 802.11u (HS2.0) information elements from the Wi-Fi Access point which may comprise information about the Wi-Fi load, backhaul limitations, as well as identities of operators which support roaming with this Wi-Fi access network, e.g. Roaming Consortium.

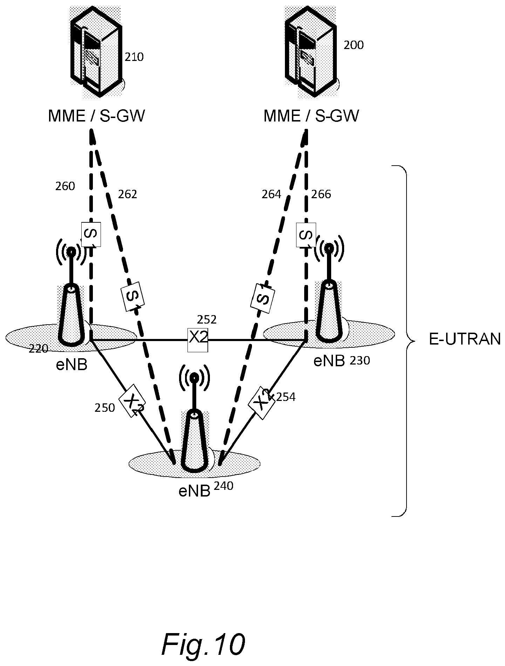

**Figure 10** schematically illustrates a portion of the LTE Radio access network and controller nodes. The Evolved UMTS Terrestrial Radio Access Network (E-UTRAN) comprises base stations called enhanced NodeBs (eNBs or eNodeBs) 220, 230, 240, providing the E-UTRA user plane and control plane protocol terminations towards the User Equipment (UE). The eNBs are interconnected with each other by means of the X2 interface 250, 252, 254. The eNBs are also connected by means of the S1 interface to the Evolved Packet Core (EPC) 260, 262, 264, 266, more specifically to the Mobility Management Entity (MME) 200, 210 by means of the S1-MME interface and to the Serving Gateway (S-GW) 200, 210 by means of the S1-U interface. The S1 interface supports many-to-many relation between MMEs / S-GWs and eNBs.

The eNB may host functionalities such as Radio Resource Management (RRM), radio bearer control, admission control, header compression of user plane data towards serving gateway, routing of user plane data towards the serving gateway. The MME is the control node that processes the signaling between the UE and the CN. The main functions of the MME are related to connection management and bearer management, which are handled via Non Access Stratum (NAS) protocols. The S-GW is the anchor point for UE mobility, and also comprises other functionalities such as temporary DL data buffering while the UE is being paged, packet routing and forwarding the right eNB, gathering of information for charging and lawful interception. The PDN Gateway (P-GW) is the node responsible for UE IP address allocation, as well as Quality of Service (QoS) enforcement.

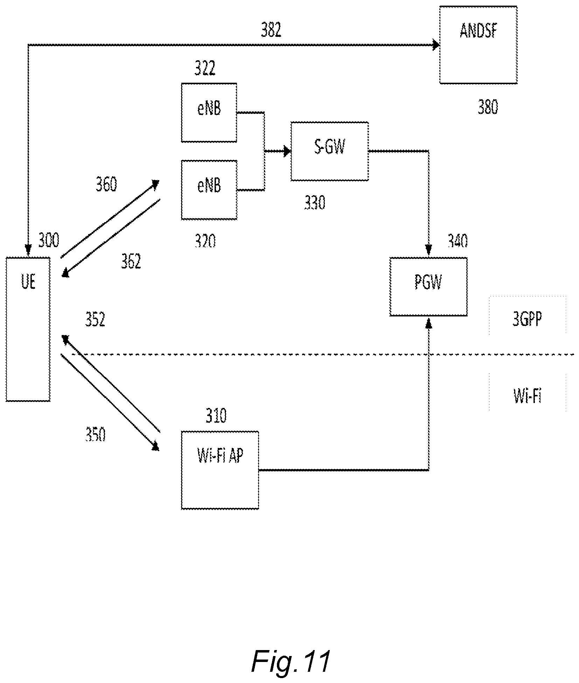

**Figure 11** schematically illustrates a network where the E-UTRAN radio access parts 320, 322 and the Wi-Fi wireless access point 310 are both connected to the same P-GW 340. A UE is illustrated 300, capable of being served both from the Wi-Fi Access Point 310 and the LTE eNB's 320, 322. Figure 11 scheamtically illustrates one possible way of connecting a Wi-Fi access network to the same core network as the 3GPP specified access network. It should be noted that embodiments herein is not restricted to scenarios when the Wi-Fi access network is connected in this way, scenarios where the networks are more separate, e.g., like illustrated in Figures 9 and 10 are also possible scenarios.

The embodiments herein may be implemented through one or more processors, such as a processor in a network node of the respective RANs and a processor in the communication device, together with computer program code for performing the functions and actions of the embodiments herein. The program code may be implemented in one or several network nodes both in the cellular network and/or in the non-cellular network and/or in the communication device (e.g. UE and/ or STA). The program code mentioned above may also be provided as a computer program product, for instance in the form of a data carrier carrying computer program code for performing the embodiments herein when being loaded into network node or communication device. One such carrier may be in the form of a CD ROM disc. It is however feasible with other data carriers such as a memory stick. The computer program code may furthermore be provided as pure program code on a server and downloaded to the network node or the communication device.

A network node of the respective RAN and the communication device may further comprise a memory comprising one or more memory units. The memory is arranged to be used to store obtained information, store data, configurations, schedulings, and applications etc. to perform the methods herein when being executed in the RAN or the communication device.

Accordingly the proposed technology provides a computer program 1350 to be used by a communication device, the computer program 1350 comprising instructions, which when executed by a processor cause the processor to:
- initiate a request for a second connection to a target RAN;
- incorporate the reason for the requested second connection in a notification to be communicated to the target RAN, thereby enabling the target RAN to provide the second connection based on the information.

The computer program can be comprised in computer program product 1450 comprising a computer-readable storage medium having stored thereon the computer program.

The use of such a computer program and computer a program product in a communication device is shown schematically in FIG. 20.

Another aspect of the proposed technology also provides a computer program 2350 to be used by a network node, the computer program comprising instructions, which when executed by a processor cause the processor to:
- read a connection request comprising information about the reasons for the connection request;
- decide, based at least partially on the information about the reasons for the connection request, whether the connection request is granted and the communication device given access to the RAN.

The computer program can be comprised in a computer program product 2450 comprising a computer-readable storage medium having stored thereon the computer program.

The use of such a computer program and computer program product in a network node is shown schematically in FIG. 20.

Those skilled in the art will also appreciate that embodiments herein comprises one or more modules to realize features and functions and to perform actions described herein. The modules may refer to a combination of analog and digital circuits, and/or one or more processors configured with software and/or firmware, e.g. stored in the memory, that when executed by the one or more processors such as the processors in the RAN, the network node and communication device perform as described above. One or more of these processors, as well as the other digital hardware, may be included in a single application-specific integrated circuitry (ASIC), or several processors and various digital hardware may be distributed among several separate components, whether individually packaged or assembled into a system-on-a-chip (SoC).

In other words, the flow diagram or diagrams presented herein may therefore be regarded as a computer flow diagram or diagrams, when performed by one or more processors. A corresponding communication device or network node may therefore be defined as a group of function modules, where each step performed by the processor corresponds to a function module. In this case, the function modules are implemented as a computer program running on the processor. Hence, the communication device or the network node may alternatively be defined as a group of function modules, where the function modules are implemented as a computer program running on at least one processor.

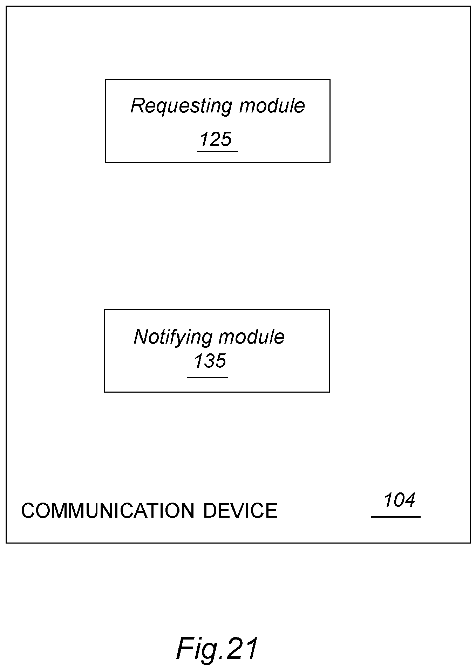

The computer program residing in memory may thus be organized as appropriate function modules configured to perform, when executed by the processor, at least part of the steps and/or tasks described herein. Examples of such function modules are illustrated in FIG. 21, FIG 22 and FIG.23.

Figure 21 is a schematic block diagram illustrating an example of a communication device comprising a group of function modules. In detail there is shown a communication device for enabling steering of access from a source Radio Access Network, source RAN, initially serving the communication device through a first connection, to a target Radio Access Network, target RAN. The communication device comprises:
- a requesting module (125) for requesting a second connection to a target RAN;
- a notifying module (135) for notifying the target RAN about the reason for the requested second connection, enabling the target RAN to provide the second connection based on the notification.

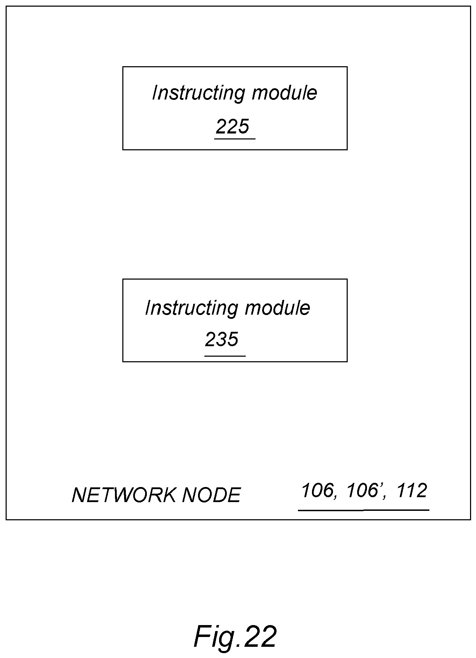

FIG. 22 illustrates schematically a network node for a Radio Access Network, RAN, for initiating a steering of a communication device from the RAN to a target Radio Access Network, target RAN. The network node comprises:
- an instructing module (225) for instructing the communication device to request a second connection to the target RAN, and
- an instructing module (235) for instructing the communication device to provide the reasons for the second connection.

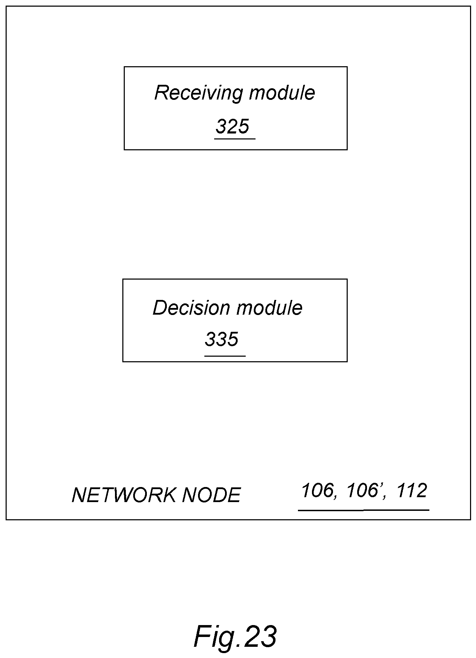

FIG.23 illustrates a network node for a Radio Access Network, RAN, for deciding whether a communication device initially connected to a source Radio Access Network, source RAN, is granted access to the RAN. The network node comprises:
- a receiving module (325) for receiving a connection request comprising information about the reasons for the connection request, and
- a decision module (335), for deciding, based at least partially on the received information about the reasons for the connection request, whether the connection request is granted and the communication device given access to the RAN.

Alternatively it is possibly to realize the modules in Figure 20-23 predominantly by hardware modules, or alternatively by hardware. The extent of software versus hardware is purely implementation selection.

When using the word "comprise" or "comprising" it shall be interpreted as non-limiting, i.e. meaning "consist at least of".

Therefore, the above embodiments should not be taken as limiting the scope of the invention, which is defined by the appending claims.

### REFERENCES

[1] Port-Based Network Access Control", IEEE Std. 802.1X-2010, IEEE Computer Society
[2] "Part 11: Wireless LAN Medium Access Control (MAC) and Physical Layer (PHY) Specifications", IEEE Std. 802.11-2012, IEEE Computer Society
[3] RP-122038 - New Study Item Proposal on WLAN/3GPP Radio Interworking, Intel Corporation
[4] 3GPP TR 37.834: WLAN/3GPP Radio Interworking
[5] 3GPP RP-132101, New Work Item Proposal on WLAN/3GPP Radio Interworking

## Claims

1. Method performed by a network node (106, 106', 112) in a Radio Access Network, RAN, for initiating a steering of a communication device (104) from the RAN to a target Radio Access Network, target RAN, wherein the RAN is initially serving the communication device (104) through a first connection, the method comprises:
- instructing (S10) the communication device (104) to request a second connection to the target RAN; and the method is **characterized in that** it further comprises
- instructing (S20) the communication device (104) to provide to the target RAN the reasons for requesting the second connection.

2. A Network node (106, 106', 112) for use in a Radio Access Network, RAN, configured to initiate a steering of a communication device (104) from the RAN to a target Radio Access Network, target RAN, wherein the RAN is configured to initially serve the communication device (104) through a first connection, and
- wherein the network node (106, 106', 112) is configured to instruct the communication device (104) to request a second connection to the target RAN and the network node (106, 106', 112) is **characterized in that** it is configured to instruct the communication device (104) to provide to the target RAN the reasons for requesting the second connection.

## Patentansprüche

1. Verfahren, das von einem Netzwerkknoten (106, 106', 112) in einem Funkzugangsnetzwerk, RAN, durchgeführt wird, zum Initiieren eines Steuerns einer Kommunikationsvorrichtung (104) vom RAN zu einem Ziel-Funkzugangsnetzwerk, Ziel-RAN, wobei das RAN die Kommunikationsvorrichtung (104) anfänglich durch eine erste Verbindung versorgt, wobei das Verfahren umfasst:
- Anweisen (S10) der Kommunikationsvorrichtung (104),
eine zweite Verbindung zum Ziel-RAN anzufordern; und
wobei das Verfahren **dadurch gekennzeichnet ist, dass** es ferner umfasst:
- Anweisen (S20) der Kommunikationsvorrichtung (104), die Gründe für das Anfordern der zweiten Verbindung an das Ziel-RAN zu übermitteln.

2. Netzwerkknoten (106, 106', 112) zur Verwendung in einem Funkzugangsnetzwerk, RAN, der zum Initiieren eines Steuerns einer Kommunikationsvorrichtung (104) vom RAN zu einem Ziel-Funkzugangsnetzwerk, Ziel-RAN, konfiguriert ist, wobei das RAN so konfiguriert ist, dass es die Kommunikationsvorrichtung (104) anfänglich durch eine erste Verbindung versorgt, und
- wobei der Netzwerkknoten (106, 106', 112) so konfiguriert ist, dass er die Kommunikationsvorrichtung (104) zum Anfordern einer zweiten Verbindung zum Ziel-RAN anweist; und
der Netzwerkknoten (106, 106', 112) **dadurch gekennzeichnet ist, dass** er die Kommunikationsvorrichtung (104) zum Übermitteln der Gründe für das Anfordern der zweiten Verbindung an das Ziel-RAN anweist.

## Revendications

1. Procédé réalisé par un nœud de réseau (106, 106', 112) dans un réseau d'accès radio, RAN, pour lancer une orientation d'un dispositif de communication (104) depuis le RAN vers un réseau d'accès radio cible, RAN cible, dans lequel le RAN dessert initialement le dispositif de communication (104) par l'intermédiaire d'une première connexion, le procédé comprend :
- l'instruction (S10) au dispositif de communication (104) de demander une deuxième connexion au RAN cible ; et
le procédé est **caractérisé en ce qu'**il comprend en outre
- l'instruction (S20) au dispositif de communication (104) de fournir au RAN cible les raisons de la demande de la deuxième connexion.

2. Nœud de réseau (106, 106', 112) destiné à être utilisé dans un réseau d'accès radio, RAN, configuré pour lancer une orientation d'un dispositif de communication (104) depuis le RAN vers un réseau d'accès radio cible, RAN cible, dans lequel le RAN est configuré pour desservir initialement le dispositif de communication (104) par l'intermédiaire d'une première connexion, et
- dans lequel le nœud de réseau (106, 106', 112) est configuré pour instruire au dispositif de communication (104) de demander une deuxième connexion au RAN cible ; et
le nœud de réseau (106, 106', 112) est **caractérisé en ce qu'**il est configuré pour instruire au dispositif de communication (104) de fournir au RAN cible les raisons de la demande de la deuxième connexion.
